# EUROPEAN PATENT APPLICATION

(11) **EP 3 900 535 A1**
(43) Date of publication of application: **27.10.2021**
(21) Application number: 20171375.7
(22) Date of filing: 24.04.2020
(51) Int. Cl.: A01N 25/02, A01N 47/36, A01P 13/00

(54) **LIQUID SULFONYLUREA HERBICIDE COMPOSITION**

(71) Applicant: Battelle UK Limited, Chelmsford Essex CM2 5LB (GB); Mitsui AgriScience International S.A./N.V., Dublin D02 N820 (IE)
(72) Inventor: Groome, John, Havant Hampshire PO9 3TG (GB); Goldsmith, Andrew, Waterlooville, Hampshire PO7 6TY (GB); Clapperton, Richard, Southampton SO32 2NS (GB); Hopley, Wayne, Fareham Hampshire PO16 7RR (GB)
(74) Representative: Hoffmann Eitle

(57) **Abstract**

The present invention relates to a liquid herbicidal composition comprising: a non-aqueous solvent system; at least one sulfonylurea herbicide in an amount of 10 wt.% or less; and two or more surfactants; and characterized in that: 80 wt.% to 100 wt.% of the total amount of surfactant in the liquid composition is made up of surfactants selected from the surfactant classes 1-14 as described herein; and at least two different surfactant classes 1-14 each account for at least 10 wt.% of the total amount of surfactant in the liquid composition. The inventors have found that, if a combination of two or more surfactants from the different surfactant classes are employed, and if a significant portion of the total amount of surfactant in the liquid composition is made of surfactants from the identified surfactant classes, then degradation of the sulfonylurea can be greatly reduced or eliminated, even in the absence of a stabilising agent.

## Description

### 1. FIELD OF THE INVENTION

This invention relates to liquid herbicidal compositions comprising a non-aqueous solvent system, at least one sulfonylurea herbicide in an amount of 10 wt.% or less, and a combination of at least two surfactants as will be described herein. The invention also relates to the use of this combination of surfactants to improve chemical stabilisation of sulfonylurea herbicides in low amounts in liquid compositions that comprise non-aqueous solvent systems.

### 2. BACKGROUND OF THE INVENTION

Sulfonylureas are a well-known and important class of herbicides that are widely used for controlling a range of annual and perennial broad-leaved weeds and grasses in a wide variety of agricultural and horticultural crops, as well as in turf, pastures and non-crop situations. However, sulfonylureas are known to be unstable as they tend to hydrolyse via cleavage at the sulfonylurea bridge. While this instability is sometimes considered favourable in terms of achieving low soil residues of these compounds, it poses serious problems commercially with respect to the storage stability of the formulated products.

One way to maintain stability of sulfonylurea herbicides is to formulate them as solid products. However, end-users typically prefer liquid herbicidal compositions over solid compositions because they are easier to handle in measuring, pumping, diluting and dispersing in water, and spraying operations and also generally exhibit superior biological efficacy. However, the tendency of sulfonylurea herbicides to hydrolyse in liquid compositions makes the development of stable liquid formulations a challenge.

A first step to imparting some degree of stability is to formulate the sulfonylurea herbicide in a non-aqueous formulation such as an oil dispersion (OD), an emulsifiable concentrate (EC), or a soluble concentrate (SL). However, these kinds of formulations typically require the presence of a surfactant to disperse the sulfonylurea within the non-aqueous formulation, or to disperse the non-aqueous solvent and sulfonylurea in the final tank mixture upon dilution with water. A mixture of different surfactants is usually used to achieve these different goals.

The inventors have now found that certain typically used surfactants will cause degradation of a sulfonylurea herbicide in a non-aqueous liquid formulation. When these surfactants are used as the major component of a surfactant mixture, or worse, when these surfactants are used together with other surfactants that also cause degradation, stability of the sulfonylurea suffers greatly. The inventors have therefore sought a way to improve stabilisation of sulfonylurea herbicides in liquid compositions based on the choice of surfactant.

The inventors have further found that the degree of degradation of a sulfonylurea herbicide is dependent on the concentration of the sulfonylurea herbicide in the liquid composition. When the sulfonylurea herbicide is present in low amounts (e.g. 10 wt.% or less of the liquid composition), degradation is more severe than if the sulfonylurea is present in comparatively larger amounts. While one way to reduce degradation of the sulfonylurea in the presence of degradation-causing surfactants would be to increase its amount in the liquid composition, this is not always feasible. Sulfonylurea herbicides are very active and, if formulated with other active agents (e.g. non-sulfonylurea herbicides), they often need to be formulated in comparatively small amounts. The inventors have therefore sought a way to improve stabilisation of sulfonylurea herbicides in liquid compositions based on the choice of surfactant even when the sulfonylurea herbicide is present in low amounts.

### 3. SUMMARY OF THE INVENTION

The inventors have surprisingly found that degradation of a sulfonylurea herbicide, even in low amounts, can be reduced or avoided altogether by using a certain combination of surfactants, thereby arriving at the present invention. For the purpose of the present invention, surfactants are separated into "surfactant classes" based on a shared or common chemical structure. The inventors have found that, if a combination of two or more surfactants from these different surfactant classes are employed, and if a significant portion of the total amount of surfactant in the liquid composition is from the identified surfactant classes, then degradation of the sulfonylurea herbicide can be greatly reduced or eliminated, even if the sulfonylurea is present in low amounts.

The present invention relates to a liquid herbicidal composition comprising: a non-aqueous solvent system; one or more sulfonylurea herbicides, provided that at least one sulfonylurea herbicide is present in the liquid composition in an amount of 10 wt.% or less; and two or more surfactants; and that is characterized in that:
80 wt.% to 100 wt.% of the total amount of surfactant in the liquid composition is made up of surfactants selected from the surfactant classes 1-14 listed below; and
at least two different surfactant classes 1-14 each account for 10 wt.% or more of the total amount of surfactant in the liquid composition:

| | |
|---|---|
| Class 1 | Alkyl end-capped fatty alcohol alkoxylates; |
| Class 2 | Alkylbenzene sulfonates having a counterion that does not contain nitrogen; |
| Class 3 | Metallic stearates; |
| Class 4 | Fatty acid-polyalkylene glycol ABA-block copolymers; |
| Class 5 | Fatty alcohol alkoxylates; |
| Class 6 | Fatty acid alkoxylates; |
| Class 7 | Ethoxylated castor oil; |
| Class 8 | Sorbitan esters; |
| Class 9 | Ethoxylated sorbitan esters; |
| Class 10 | EO/PO/EO Block copolymer; |
| Class 11 | Tristyrylphenol ethoxylates; |
| Class 12 | Tristyrylphenol ethoxylates sulphate esters having a counterion that does not contain nitrogen; |
| Class 13 | Tristyrylphenol ethoxylates phosphate esters having a counterion that does not contain nitrogen; and |
| Class 14 | Ethoxylated alkyl phosphate esters having a counterion that does not contain nitrogen. |

The present invention also relates to the use of a combination of two surfactants from two different surfactant classes above for improving stability of a sulfonylurea herbicide in liquid herbicidal compositions according to the invention.

### 4. DETAILED DESCRIPTION OF THE INVENTION

### 4.1 General remarks

As used herein, the terms "comprises", "comprising", "includes", "including", "has", "having" or any other variation thereof, are intended to cover a non-exclusive inclusion. For example, a composition that comprises a list of components is not necessarily limited to only those components but may include other components that are not expressly listed or inherent to such a composition. That said, the terms "comprises", "comprising", "includes", "including", "has", "having" or any other variation thereof also cover the disclosed embodiment having no further additional components (i.e. consisting of those components).

Also, the indefinite articles "a" and "an" preceding an element or component of the invention are intended to be non-restrictive regarding the number of instances (i.e. occurrences) of the element or component. Therefore "a" or "an" should be read to include one or at least one, and the singular word form of the element or component also includes the plural unless the number is obviously meant to be singular.

Further, when an aspect of the invention is described as being 'preferred', it should be understood that this preferred aspect of the invention can be combined with other preferred aspects of the invention.

### 4.2 Liquid composition

The herbicidal composition of the invention is a liquid. By "liquid" is meant that the composition takes the form of a liquid at standard temperature and pressure. Suitable liquid compositions that can be used in the present invention include the non-aqueous-based liquid formulations defined in the *"*Catalogue of pesticide formulation types and international coding system", Technical Monograph No. 2, 6th Ed. May 2008, CropLife International. Exemplary liquid compositions for use in the present invention include a dispersible concentrate (DC), an emulsifiable concentrate (EC), the liquid part(s) of a solid/liquid (KK) or liquid/liquid (KL) combi-pack, an oil dispersion (OD), an oil miscible flowable concentrate (OF), an oil miscible liquid (OL), an oil-based soluble concentrate (SL), a spreading oil (SO), an oil-based ultra-low volume liquid (UL) or suspension (SU), or any other non-aqueous-based liquid not yet designated by a specific code in the CropLife monograph (AL). Of these, oil dispersions (OD), dispersible concentrates (DC), emulsifiable concentrates (EC), and oil-based soluble concentrates (SL) are preferred. These and other formulations are known in the art and are described, for example, in *"*Pesticide Formulations" (1973) by Wade van Valkenburg, and *"*New Trends in Crop Protection Formulations" (2013) edited by Alan Knowles.

The invention is particularly suited to improving the chemical stability of sulfonylureas in oil dispersions (OD), emulsifiable concentrates (EC), and soluble concentrates (SL). Accordingly, these types of formulation are the most preferred for the present invention. The term *"oil dispersion"* is to be understood as meaning a dispersion concentrate based on a non-aqueous solvent in which one or more solid active compounds are suspended and wherein further active ingredients are optionally dissolved in the non-aqueous solvent. In one embodiment at least one sulfonylurea compound is suspended in the non-aqueous solvent system. Additional sulfonylurea compounds may be co-suspended and/or dissolved in the non-aqueous solvent system. In addition to the one or more sulfonylurea compounds, one or more non-sulfonylurea herbicidal compounds may be suspended and/or dissolved in the non-aqueous solvent system.

In the absence of any indication to the contrary, the terms *"suspended"* and *"dissolved"* take their ordinary meaning in this technical field. Whether a compound is suspended or dissolved can be determined at standard temperature and pressure. For the avoidance of any doubt, the term *"suspended"* can be taken to mean that 80 wt.% or more, preferably 90 wt.% or more, even more preferably 95 wt.% or more of the compound in question is suspended within the liquid composition whereas the term *"dissolved"* can be taken to mean that 90 wt.% or more, preferably 95 wt.% or more, even more preferably 99 wt.% or more of the compound in question is dissolved in the liquid composition.

### 4.3 Non-aqueous solvent system

The composition of the present invention comprises a non-aqueous solvent system. The term *"non-aqueous solvent system"* means that one or more solvents (e.g. organic solvents) other than water are used as the liquid carrier in the liquid composition. This does not mean to say that the solvent system must necessarily be completely free of water. Trace amounts of water may be present in the components that are used to prepare the non-aqueous solvent system. For instance, trace amounts of water may be introduced into the solvent system by organic solvents, surfactants or salts that are used to prepare the liquid herbicidal composition. While the term *"non-aqueous solvent system"* is clear in this technical field (e.g. ODs, ECs and SLs employ a non-aqueous solvent system), for the avoidance of any doubt the term can be taken to mean that the liquid composition comprises water in an amount of 5 wt.% or less of the composition, preferably 3 wt.% or less, more preferably 2 wt.% and most preferably 1 wt.% or less.

The sulfonylurea herbicide is dissolved, dispersed, suspended or otherwise contained in the non-aqueous solvent system. Typical solvents are described in Marsden, Solvents Guide, 2nd Ed., Interscience, New York, 1950. The non-aqueous solvent system preferably contains one or more aprotic organic solvents as the major constituent of the solvent system. When the amount of aprotic solvent in the solvent system is 50 wt.% or more, stability of the sulfonylurea is greatly improved. Preferably, the one or more aprotic solvents make up 60 wt.% or more, 70 wt.% or more, 80 wt.% or more and most preferably 90 wt.% or more of the solvent system. Suitable aprotic organic solvents for use in the present invention include, for example, those listed under *"Component (C)"* in US 2005/0113254 (Bayer CropScience GmbH):
(1) hydrocarbons, which may be unsubstituted or substituted, for example
   (1a) aromatic hydrocarbons, for example mono- or polyalkyl-substituted benzenes, such as toluene, xylenes, mesitylene, ethylbenzene, or mono- or polyalkyl-substituted naphthalenes, such as 1-methylnaphthalene, 2-methylnaphthalene or dimethylnaphthalene, or other benzene-derived aromatic hydrocarbons, such as indane or Tetralin®, or mixtures thereof,
   (1b) aliphatic hydrocarbons, for example straight-chain or branched aliphatics, for example of the formula CₙH₂ₙ₊₂, such as pentane, hexane, octane, 2-methylbutane or 2,2,4-trimethylpentane, or cyclic, optionally alkyl-substituted aliphatics, such as cyclohexane or methylcyclopentane, or mixtures thereof, such as solvents of the Exxsol® D series, Isopar® series or Bayol® series, for example Bayol® 82 (ExxonMobil Chemicals), or the Isane® IP series or Hydroseal® G series (TotalFinaElf), as well as straight-chain, branched or cyclic unsaturated aliphatics including terpenes such as turpentine and its constituents (e.g. pinene, camphene) as well as compounds derivable therefrom such as isobornyl acetate (exo-1,7,7-trimethylbicyclo[2.2.1]hept-2-yl acetate),
   (1c) mixtures of aromatic and aliphatic hydrocarbons, such as solvents of the Solvesso® series, for example Solvesso® 100, Solvesso® 150 or Solvesso® 200 (ExxonMobil Chemicals), of the Solvarex®/Solvaro® series (TotalFinaElf) or the Caromax® series, for example Caromax® 28 (Petrochem Carless), or
   (1d) halogenated hydrocarbons, such as halogenated aromatic and aliphatic hydrocarbons, such as chlorobenzene or methylene chloride;
(2) aprotic polar solvents, such as ethers, esters of C₁-C₉-alkanoic acids which may be mono-, di- or polyfunctional, such as their mono-, di- or triesters, for example with C₁-C₁₈-alkyl alcohols, ketones with a low tendency to tautomerize, phosphoric acid esters, amides, nitriles or sulfones, for example tris-2-ethylhexyl phosphate, diisobutyl adipate, Rhodiasolv® RPDE (Rhodia), cyclohexanone, Jeffsol® PC (Huntsman), γ-butyrolactone, pyrrolidone-based solvents such as N-methylpyrrolidone or N-butylpyrrolidone, dimethyl sulfoxide, acetonitrile, tributylphosphatam or the Hostarex® PO series (Clariant);
(3) fatty acid esters, for example of natural origin, for example natural oils, such as animal oils or vegetable oils, or of synthetic origin, for example the Edenor® series, for example Edenor® MEPa or Edenor® MESU, or the Agnique® ME series or Agnique® AE series (Cognis), the Salim® ME series (Salim), the Radia® series, for example Radia® 30167 (ICI), the Prilube® series, for example Prilube® 1530 (Petrofina), the Stepan® C series (Stepan) or the Witconol® 23 series (Witco). The fatty acid esters are preferably esters of C₁₀-C₂₂-, with preference C₁₂-C₂₀-fatty acids. The C₁₀-C₂₂-fatty acid esters are, for example, esters of unsaturated or saturated C₁₀-C₂₂-fatty acids, in particular those having an even number of carbon atoms, for example erucic acid, lauric acid, palmitic acid, and in particular C₁₈-fatty acids, such as stearic acid, oleic acid, linoleic acid or linolenic acid.

Examples of fatty acid esters such as C₁₀-C₂₂-fatty acid esters are glycerol and glycol esters of fatty acids such as C₁₀-C₂₂-fatty acids, or transesterification products thereof, for example fatty acid alkyl esters such as C₁₀-C₂₂-fatty acid C₁-C₂₀-alkyl esters, which can be obtained, for example, by transesterification of the abovementioned glycerol or glycol fatty acid esters such as C₁₀-C₂₂-fatty acid esters with C₁-C₂₀-alcohols (for example methanol, ethanol, propanol or butanol). Preferred fatty acid alkyl esters such as C₁₀-C₂₂-fatty acid C₁-C₂₀-alkyl esters are methyl esters, ethyl esters, propyl esters, butyl esters, 2-ethylhexyl esters and dodecyl esters. Preferred glycol and glycerol fatty acid esters such as C₁₀-C₂₂-fatty acid esters are the uniform or mixed glycol esters and glycerol esters of C₁₀-C₂₂-fatty acids, in particular of such fatty acids having an even number of carbon atoms, for example erucic acid, lauric acid, palmitic acid and in particular C₁₈-fatty acids such as stearic acid, oleic acid, linoleic acid or linolenic acid.

Animal oils and vegetable oils are generally known and commercially available. For the purpose of the present invention, the term "animal oils" is to be understood as meaning oils of animal origin such as whale oil, cod-liver oil, musk oil or mink oil, and the term "vegetable oils" is to be understood as meaning oils of oleaginous plant species, such as soybean oil, rapeseed oil, corn oil, sunflower oil, cottonseed oil, linseed oil, coconut oil, palm oil, thistle oil, walnut oil, arachis oil, olive oil or castor oil, in particular rapeseed oil, where the vegetable oils also include their transesterification products, for example alkyl esters, such as rapeseed oil methyl ester or rapeseed oil ethyl ester.

The vegetable oils are preferably esters of C₁₀-C₂₂-fatty acids, preferably C₁₂-C₂₀-fatty acids. The C₁₀-C₂₂-fatty acid esters are, for example, esters of unsaturated or saturated C₁₀-C₂₂-fatty acids having, in particular, an even number of carbon atoms, for example erucic acid, lauric acid, palmitic acid and in particular C₁₈-fatty acids such as stearic acid, oleic acid, linoleic acid or linolenic acid. Examples of vegetable oils are C₁₀-C₂₂-fatty acid esters of glycerol or glycol with C₁₀-C₂₂-fatty acids, or C₁₀-C₂₂-fatty acid C₁-C₂₀-alkyl esters which can be obtained, for example, by transesterification of the glycerol or glycol C₁₀-C₂₂-fatty acid esters mentioned above with C₁-C₂₀-alcohols (for example methanol, ethanol, propanol or butanol). The vegetable oils can be contained in the mixtures for example in the form of commercially available vegetable oils, in particular rapeseed oils, such as rapeseed oil methyl ester, for example Phytorob® B (Novance, France), Edenor® MESU and the Agnique® ME series (Cognis, Germany) the Radia® series (ICI), the Prilube® series (Petrofina), or biodiesel or in the form of commercially available plant-oil-containing formulation additives, in particular those based on rapeseed oils, such as rapeseed oil methyl esters, for example Hasten® (Victoria Chemical Company, Australia), Actirob® B (Novance, France), Rako-Binol® (Bayer AG, Germany), Renol® (Stefes, Germany) or Mero® (Stefes, Germany).

Examples of synthetic acid esters are, for example, those derived from fatty acids having an odd number of carbon atoms, such as C₁₁-C₂₁-fatty acid esters.

Preferred organic solvents are hydrocarbons, in particular aromatic hydrocarbons and/or aliphatic hydrocarbons and fatty acid esters, such as vegetable oils, such as triglycerides of fatty acids having 10 to 22 carbon atoms, which may be saturated or else unsaturated, straight-chain or branched and which may or may not carry further functional groups, such as corn oil, rapeseed oil, sunflower oil, cottonseed oil, linseed oil, soybean oil, coconut oil, palm oil, thistle oil or castor oil, and their trans-esterification products, such as fatty acid alkyl esters, and mixtures thereof.

Preferred solvents for use in the present invention include: linear or branched C6 to C30 paraffin oils, for example hexane, heptane, octane, nonane, decane, undecane, dodecane, tridecane, tetradecane, pentadecane, hexadecane, their mixtures, or mixtures thereof with higher boiling homologs, such as hepta-, octa-, nona-decane, eicosane, heneicosane, docosane, tricosane, tetracosane, pentacosane, and the branched chain isomers thereof; aromatic or cycloaliphatic solvents, which may be unsubstituted or substituted, C7- to C18-hydrocarbon compounds such as mono- or polyalkyl-substituted benzenes, or mono- or polyalkyl-substituted naphthalenes; vegetable oils such as liquid triglycerides, for example olive oil, kapok oil, castor oil, papaya oil, camellia oil, palm oil, sesame oil, corn oil, rice bran oil, peanut oil, walnut oil, coconut oil, cotton seed oil, soybean oil, rapeseed oil, linseed oil, tung oil, sunflower oil, safflower oil, or also transesterification products thereof, e.g. alkyl esters, such as rapeseed oil methyl ester or rapeseed oil ethyl ester; animal oil, such as whale oil, cod-liver oil, or mink oil; liquid esters of C1 to C12 monoalcohols or polyols, for example butanol, n-octanol, i-octanol, dodecanol, cyclopentanol, cyclohexanol, cyclooctanol, ethylene glycol, propylene glycol or benzyl alcohol, with C2 to C10 carboxylic or polycarboxylic acids, such as caproic acid, capric acid, caprylic acid, pelargonic acid, succinic acid and glutaric acid; or with aromatic carboxylic acids such as benzoic acid, toluic acid, salicylic acid and phthalic acid. Esters which can be used in the composition of the invention are thus, for example, benzyl acetate, caproic acid ethyl ester, isobornyl acetate, pelargonic acid ethyl ester, benzoic acid methyl or ethyl ester, salicylic acid methyl, propyl, or butyl ester, diesters of phthalic acid with saturated aliphatic or alicyclic C1 to C12 alcohols, such as phthalic acid dimethyl ester, dibutyl ester, diisooctyl ester; liquid amides of C1-C3 amines, alkylamines or alkanolamines with C6 to C18 carboxylic acids; or mixtures thereof.

The non-aqueous solvent system is present in an amount such that it can act as a liquid carrier for the other components that are present in the composition. Preferably, the non-aqueous solvent system comprises an organic solvent in an amount of at least 5 wt.% based on the weight of the composition. A low amount of organic solvent is possible when other components in the composition are also liquids (e.g. liquid herbicide and/or liquid emulsifier). More preferably, the non-aqueous solvent system comprises an organic solvent in an amount of at least 10 wt.%, at least 15 wt.%, at least 20 wt%, at least 25 wt%, at least 30 wt.%, or at least 40 wt.% of the composition. Preferably the non-aqueous solvent system comprises an organic solvent in an amount of 95 wt.% or less of the composition. More preferably the non-aqueous solvent system comprises an organic solvent in an amount of 90 wt.% or less, 85 wt.% or less, 80 wt.% or less, 75 wt.% or less, or 60 wt.% or less of the composition. Any of the disclosed wt.% lower limits for the amount of the organic solvent in the non-aqueous solvent system can be combined with any of the disclosed wt.% upper limits to define further suitable wt.% ranges for the purpose of this invention. As an example, exemplary ranges for the amount of the organic solvent in the composition include 5 to 95 wt.%, 10 to 90 wt.%, 20 to 80 wt.%, 30 to 60 wt.%, 40 to 60 wt.%, 10 to 75 wt.% and 20 to 60 wt.%, all based on the weight of the liquid herbicidal composition.

When more than one organic solvent is present in the composition then the amounts described herein refer to the sum amount of all the organic solvents present in the composition.

The total amount of protic organic solvent such as alcohols, amines and carboxylic acids is preferably kept to 20 wt.% or less based on the weight of the liquid composition. More preferably, the total amount of protic organic solvent is 15 wt.% or less, 10 wt.% or less, 5 wt.% or less, 2 wt.% or less, or 1 wt.% or less of the composition. When more than one protic solvent is present in the composition then the amounts described herein refer to the sum amount of all the protic solvents present in the composition.

### 4.4 Sulfonylurea

The liquid composition of the present invention comprises at least one sulfonylurea herbicide that is present in an amount of 10 wt.% or less based on the weight of the liquid composition. The sulfonylurea is not particularly limited and can be any herbicidal sulfonylurea known in the art or described in the patent literature. For example, the sulfonylurea may be selected from the sulfonylureas listed in the 16th Edition of "The Pesticide Manual" (ISBN-10: 190139686X). By way of a general structure, the sulfonylurea may be a compound according to Formula (1) as described in WO 2007/027863 A2 (E.I. DuPont De Nemours and Company): 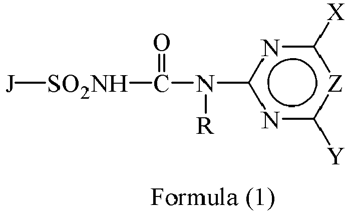 wherein J is R¹³SO₂N(CH₃)- or J is selected from the group consisting of 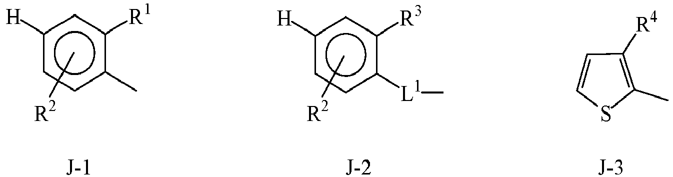 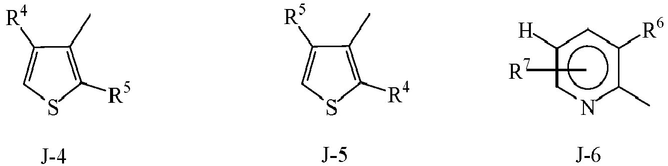 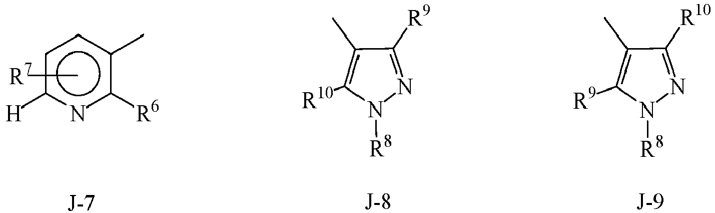 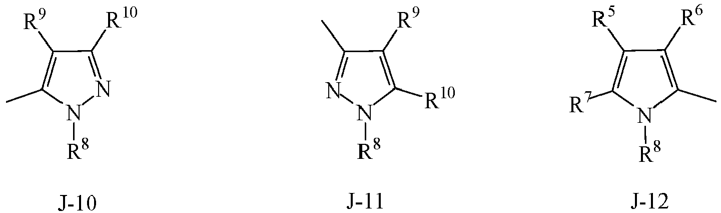 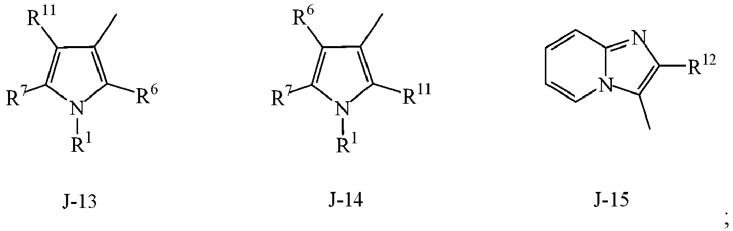 and wherein:
R is H or CH₃;
R¹ is F, Cl, Br, NO₂, C₁-C₄ alkyl, C₁-C₄ haloalkyl, C₃-C₄ cycloalkyl, C₂-C₄ haloalkenyl, C₁-C₄ alkoxy, C₁-C₄ haloalkoxy, C₂-C₄ alkoxyalkoxy, CO₂R¹⁴, C(O)NR¹⁵R¹⁶, SO2NR¹⁷R¹⁸, S(O)ₙR¹⁹, C(O)R²⁰, CH₂CN or L;
R² is H, F, Cl, Br, I, CN, CH₃, OCH₃, SCH₃, CF₃ or OCF₂H;
R³ is Cl, NO₂, CO₂CH₃, CO₂CH₂CH₃, C(O)CH₃, C(O)CH₂CH₃, C(O)-cyclopropyl, SO₂N(CH₃)₂, SO₂CH₃, SO₂CH₂CH₃, OCH₃ or OCH₂CH₃;
R⁴ is C₁-C₃ alkyl, C₁-C₂ haloalkyl, C₁-C₂ alkoxy, C₂-C₄ haloalkenyl; F, Cl, Br, NO₂, CO₂R₁₄, C(O)NR₁₅R₁₆, SO₂NR₁₇R₁₈, S(O)nR₁₉, C(O)R₂₀ or L;
R⁵ is H, F, Cl, Br or CH₃;
R⁶ is C₁-C₃ alkyl optionally substituted with 0-3 F, 0-1 Cl and 0-1 C₃-C₄ alkoxyacetyloxy, or R⁶ is C₁-C₂ alkoxy, C₂-C₄ haloalkenyl, F, Cl, Br, CO₂R¹⁴, C(O)NR¹⁵R¹⁶, SO₂NR¹⁷R¹⁸, S(O)ₙR¹⁹, C(O)R²⁰ or L;
R⁷ is H, F, Cl, CH₃ or CF₃;
R⁸ is H, C₁-C₃ alkyl or pyridyl;
R⁹ is C₁-C₃ alkyl, C₁-C₂ alkoxy, F, Cl, Br, NO₂, CO₂R¹⁴, SO₂NR¹⁷R¹⁸, S(O)ₙR¹⁹, OCF₂H, C(O)R²⁰, C₂-C₄ haloalkenyl or L;
R¹⁰ is H, Cl, F, Br, C₁-C₃ alkyl or C₁-C₂ alkoxy;
R¹¹ is H, C₁-C₃ alkyl, C₁-C₂ alkoxy, C₂-C₄ haloalkenyl, F, Cl, Br, CO₂R¹⁴, C(O)NR¹⁵R¹⁶, SO₂NR¹⁷R¹⁸, S(O)ₙR¹⁹, C(O)R²⁰ or L;
R¹² is halogen, C₁-C₄ alkyl or C₁-C₃ alkylsulfonyl;
R¹³ is C₁-C₄ alkyl;
R¹⁴ is selected from the group consisting of allyl, propargyl, oxetan-3-yl and C₁-C₃ alkyl optionally substituted by at least one member independently selected from halogen, C₁-C₂ alkoxy and CN;
R¹⁵ is H, C₁-C₃ alkyl or C₁-C₂ alkoxy;
R¹⁶ is C₁-C₂ alkyl;
R¹⁷ is H, C₁-C₃ alkyl, C₁-C₂ alkoxy, allyl or cyclopropyl;
R¹⁸ is H or C₁-C₃ alkyl;
R¹⁹ is C₁-C₃ alkyl, C₁-C₃ haloalkyl, allyl or propargyl;
R²⁰ is C₁-C₄ alkyl, C₁-C₄ haloalkyl or C₃-C₅ cycloalkyl optionally substituted by halogen;
n is 0, 1 or 2;
L is 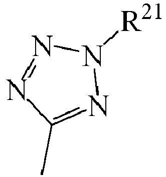
L¹ is CH₂, NH or O;
R²¹ is selected from the group H and C₁-C₃ alkyl;
X is selected from the group H, C₁-C₄ alkyl, C₁-C₄ alkoxy, C₁-C₄ haloalkoxy, C₁-C₄ haloalkyl, C₁-C₄ haloalkylthio, C₁-C₄ alkylthio, halogen, C₂-C₅ alkoxyalkyl, C₂-C₅ alkoxyalkoxy, amino, C₁-C₃ alkylamino and di(C₁-C₃ alkyl)amino;
Y is selected from the group H, C₁-C₄ alkyl, C₁-C₄ alkoxy, C₁-C₄ haloalkoxy, C₁-C₄ alkylthio, C₁-C₄ haloalkylthio, C₂-C₅ alkoxyalkyl, C₂-C₅ alkoxyalkoxy, amino, C₁-C₃ alkylamino, di(C₁-C₃ alkyl)amino, C₃-C₄ alkenyloxy, C₃-C₄ alkynyloxy, C₂-C₅ alkylthioalkyl, C₂-C₅ alkylsulfinylalkyl, C₂-C₅ alkylsulfonylalkyl, C₁-C₄ haloalkyl, C₂-C₄ alkynyl, C₃-C₅ cycloalkyl, azido and cyano; and
Z is selected from the group CH and N;
provided that (i) when one or both of X and Y is C1 haloalkoxy, then Z is CH; and (ii) when X is halogen, then Z is CH and Y is OCH₃, OCH₂CH₃, N(OCH₃)CH₃, NHCH₃, N(CH₃)₂ or CF₂H.

In Formula (1) above, the term "alkyl", used either alone or in compound words such as "alkylthio" or "haloalkyl" includes a straight-chain or branched alkyl, such as, methyl, ethyl, *n*-propyl, *i*-propyl, or the different butyl isomers; "cycloalkyl" includes, for example, cyclopropyl, cyclobutyl and cyclopentyl; "alkenyl" includes straight-chain or branched alkenes such as ethenyl, 1-propenyl, 2-propenyl, and the different butenyl isomers; "alkenyl" also includes polyenes such as 1,2-propadienyl and 2,4-butadienyl; "alkynyl" includes straight-chain or branched alkynes such as ethynyl, 1-propynyl, 2-propynyl and the different butynyl isomers; "alkynyl" can also include moieties comprised of multiple triple bonds such as 2,5-hexadiynyl; "alkoxy" includes, for example, methoxy, ethoxy, *n*-propyloxy, isopropyloxy and the different butoxy isomers; "alkoxyalkyl" denotes alkoxy substitution on alkyl and examples include CH₃OCH₂, CH₃OCH₂CH₂, CH₃CH₂OCH₂, CH₃CH₂CH₂CH₂OCH₂ and CH₃CH₂OCH₂CH₂; "alkoxyalkoxy" denotes alkoxy substitution on alkoxy; "alkenyloxy" includes straight-chain or branched alkenyloxy moieties and examples include H₂C=CHCH₂O, (CH₃)CH=CHCH₂O and CH₂=CHCH₂CH₂O; "alkynyloxy" includes straight-chain or branched alkynyloxy moieties and examples include HC≡CCH₂O and CH₃C≡CCH₂O; "alkylthio" includes branched or straight-chain alkylthio moieties such as methylthio, ethylthio, and the different propylthio isomers; "alkylthioalkyl" denotes alkylthio substitution on alkyl and examples include CH₃SCH₂, CH₃SCH₂CH₂, CH₃CH₂SCH₂, CH₃CH₂CH₂CH₂SCH₂ and CH₃CH₂SCH₂CH₂; "alkylsulfinylalkyl" and "alkylsulfonylalkyl" include the corresponding sulfoxides and sulfones, respectively; other substituents such as "alkylamino", "dialkylamino" are defined analogously.

In Formula (1) above the total number of carbon atoms in a substituent group is indicated by the "Ci-Cj" prefix where i and j are numbers from 1 to 5. For example, C₁-C₄ alkyl designates methyl through butyl, including the various isomers. As further examples, C₂ alkoxyalkyl designates CH₃OCH₂; C₃ alkoxyalkyl designates, for example, CH₃CH(OCH₃), CH₃OCH₂CH₂ or CH₃CH₂OCH₂; and C₄ alkoxyalkyl designates the various isomers of an alkyl group substituted with an alkoxy group containing a total of four carbon atoms, examples including CH₃CH₂CH₂OCH₂ and CH₃CH₂OCH₂CH₂.

In Formula (1) above the term "halogen", either alone or in compound words such as "haloalkyl", includes fluorine, chlorine, bromine or iodine. Further, when used in compound words such as "haloalkyl", said alkyl may be partially or fully substituted with halogen atoms which may be the same or different. Examples of "haloalkyl" include F₃C, ClCH₂, CF₃CH₂ and CF₃CCl₂. The terms "haloalkoxy", "haloalkylthio", and the like, are defined analogously to the term "haloalkyl". Examples of "haloalkoxy" include CF₃O, CCl₃CH₂O, HCF₂CH₂CH₂O and CF₃CH₂O. Examples of "haloalkylthio" include CCl₃S, CF₃S, CCl₃CH₂S and ClCH₂CH₂CH₂S.

For this invention, preferable sulfonylureas according to Formula (1) include those where X is selected from the group C₁-C₄ alkyl, C₁-C₄ alkoxy, C₁-C₄ haloalkoxy, halogen, di(C₁-C₃ alkyl)amino and Y is selected from the group C₁-C₄ alkyl, C₁-C₄ alkoxy, and C₁-C₄ haloalkoxy. More preferably, X is selected from CH₃, OCH₃, Cl, OCHF₂, and N(CH₃)₂ and Y is selected from CH₃, OCH₃, OCHF₂ and OCH₂CF₃.

Preferable sulfonylureas according to Formula (1) also include those where J is J-1, R¹ is Cl, CO₂CH₃, CO₂C₂H₅, CH₂CH₂CF₃, or OCH₂CH₂Cl, and R² is H; J is J-1, R¹ is CO₂CH₃, and R² is CH₃; J is J-2, R³ is CO₂C₂H₅, OCH₂CH₃, or COC₃-cycloalkyl, L¹ is CH₂, O, or NH, and R² is H; J is J-5, R⁴ is CO₂CH₃, and R⁵ is H; J is J-6, R⁶ is CON(CH₃)₂, SO₂CH₂CH₃, or CF₃, and R⁷ is H; J is J-10, R⁸ is CH₃, R⁹ is CO₂CH₃ and R¹⁰ is Cl.

For the purpose of this invention, the sulfonylurea according to Formula (1), or any of the exemplary sulfonylureas mentioned herein, is to be understood as meaning all of the usual use forms in this technical field, such as acids, esters, salts and isomers. In this invention the salt includes acid-addition salts with inorganic or organic acids such as hydrobromic, hydrochloric, nitric, phosphoric, sulfuric, acetic, butyric, fumaric, lactic, maleic, malonic, oxalic, propionic, salicylic, tartaric, 4-toluenesulfonic or valeric acids. Also included are salts formed with organic bases (e.g., pyridine, ammonia, or triethylamine) or inorganic bases (e.g., hydrides, hydroxides, or carbonates of sodium, potassium, lithium, calcium, magnesium or barium). Preferred salts of the sulfonylureas according to Formula (1), or the exemplary sulfonylureas mentioned herein, include lithium, sodium, potassium, triethylammonium, and quaternary ammonium salts. Preferred esters for the purpose of this invention are the alkyl esters, in particular the C₁-C₁₀-alkyl esters, such as methyl and ethyl esters.

Exemplary sulfonylureas according to Formula (1) that can be used for this invention include:
amidosulfuron (*N*-[[[[(4,6-dimethoxy-2-pyrimdinyl)amino]carbonyl]amino]sulfonyl]-*N*-methylmethanesulfonamide),
azimsulfuron (*N*-[[(4,6-dimethoxy-2-pyrimidinyl)amino]-carbonyl]-1-methyl-4-(2-methyl-2*H*-tetrazol-5-yl)-1*H*-pyrazole-5-sulfonamide),
bensulfuron-methyl (methyl 2-[[[[[(4,6-dimethoxy-2-pyrimidinyl)amino] carbonyl] amino] - sulfonyl] methyl]benzoate),
chlorimuron-ethyl (ethyl 2-[[[[(4-chloro-6-methoxy-2-pyrimidinyl)amino]carbonyl]amino]sulfonyl]benzoate),
chlorsulfuron (2-chloro-*N*-[[(4-methoxy-6-methyl-1,3,5-triazin-2-yl)amino]carbonyl]benzenesulfonamide),
cinosulfuron (*N*-[[(4,6-dimethoxy-1,3,5-triazin-2-yl)amino]carbonyl]-2-(2-methoxyethoxy)-benzenesulfonamide),
cyclosulfamuron (*N*-[[[2-(cyclopropylcarbonyl)phenyl] amino]-sulfonyl]-N¹-(4,6-dimethoxypyrimidin-2-yl)urea),
ethametsulfuron-methyl (methyl 2-[[[[[4-ethoxy-6-(methylamino)-1,3,5-triazin-2-yl] amino] carbonyl] amino] - sulfonyl]benzoate),
ethoxysulfuron (2-ethoxyphenyl [[(4,6-dimethoxy-2-pyrimidinyl)-amino] carbonyl] sulfamate),
flazasulfuron (*N*-[[(4,6-dimethoxy-2-pyrimidinyl)amino]carbonyl]-3-(trifluoromethyl)-2-pyridinesulfonamide),
flucetosulfuron (1-[3-[[[[(4,6-dimethoxy-2-pyrimidinyl)-amino] carbonyl] amino] sulfonyl] -2-pyridinyl] -2-fluoropropyl methoxyacetate),
flupyrsulfuron-methyl ((methyl 2-[[[[(4,6-dimethoxy- 2-pyrimidinyl)amino]carbonyl]amino]sulfonyl]-6-(trifluoromethyl)-3-pyridinecarboxylate),
foramsulfuron (2-[[[[(4,6-dimethoxy-2-pyrimidinyl)amino]carbonyl]amino]sulfonyl]-4-(formylamino)-*N,N*-dimethylbenzamide),
halosulfuron-methyl (methyl 3-chloro-5-[[[[(4,6-dimethoxy-2-pyrimidinyl)amino]carbonyl]amino]sulfonyl]-1-methyl-1H-pyrazole- 4-carboxylate),
imazosulfuron (2-chloro-*N*-[[(4,6-dimethoxy-2-pyrimidinyl)amino]-carbonyl]imidazo[1,2-*a*]pyridine-3-sulfonamide),
iodosulfuron-methyl (methyl 4-iodo-2-[[[[(4-methoxy-6-methyl-1,3,5-triazin-2-yl)amino] carbonyl] amino] sulfonyl]benzoate),
iofensulfuron (2-iodo-N-[[(4-methoxy-6-methyl-1,3,5-triazin-2-yl)amino]carbonyl]benzenesulfonamide),
mesosulfuron-methyl (methyl 2-[[[[(4,6-dimethoxy-2-pyrimidinyl)amino]carbonyl]amino]-sulfonyl]-4-[[(methylsulfonyl)amino]methyl]benzoate),
metazosulfuron (3-chloro-4-(5,6-dihydro-5-methyl-1,4,2-dioxazin-3-yl)-*N*-[[(4,6-dimethoxy-2-pyrimidinyl)amino]carbonyl]-1-methyl-1H-pyrazole-5- sulfonamide),
metsulfuron-methyl (methyl 2-[[[[(4-methoxy-6-methyl-1,3,5-triazin-2-yl)amino] carbonyl] amino] sulfonyl]benzoate),
nicosulfuron (2-[[[[(4,6-dimethoxy-2-pyrimidinyl)amino]carbonyl]amino]sulfonyl]-*N,N*-dimethyl-3-pyridinecarboxamide),
orthosulfamuron (2-[[[[[(4,6-dimethoxy-2-pyrimidinyl)amino] carbonyl] amino] sulfonyl] amino]-N,N-dimethylbenzamide),
oxasulfuron (3-oxetanyl 2-[[[[(4,6-dimethyl-2-pyrimidinyl)amino]carbonyl]amino]sulfonyl]benzoate),
primisulfuron-methyl (methyl 2-[[[[[4,6-bis(trifluoromethoxy)-2-pyrimidinyl] amino] carbonyl] amino] sulfonyl]benzoate),
prosulfuron (*N*-[[(4-methoxy-6-methyl-1,3,5-triazin-2-yl)amino]carbonyl]-2-(3,3,3-trifluoropropyl)benzenesulfonamide),
pyrazosulfuron-ethyl (ethyl 5-[[[[(4,6-dimethoxy-2-pyrimidinyl)amino]carbonyl]amino]sulfonyl]-1-methyl-1*H*-pyrazole-4-carboxylate),
rimsulfuron (N-[[(4,6-dimethoxy-2-pyrimidinyl)amino]carbonyl]-3-(ethylsulfonyl)-2-pyridinesulfonamide),
sulfometuron-methyl (methyl 2-[[[[(4,6-dimethyl-2-pyrimidinyl)amino] carbonyl] amino] sulfonyl] - benzoate),
sulfosulfuron (*N*-[[(4,6-dimethoxy-2-pyrimidinyl)amino]carbonyl]-2-(ethylsulfonyl)imidazo[1,2-*a*]pyridine-3-sulfonamide),
thifensulfuron-methyl (methyl 3-[[[[(4-methoxy-6-methyl-1,3,5-triazin-2-yl)amino] carbonyl] amino] sulfonyl] -2-thiophenecarboxylate),
triasulfuron (2-(2-chloroethoxy)-*N*-[[(4-methoxy-6-methyl-1,3,5-triazin-2-yl)amino]carbonyl]benzenesulfonamide),
tribenuron-methyl (methyl 2-[[[[*N*-(4-methoxy-6-methyl-1,3,5-triazin-2-yl)-*N-*methylamino]carbonyl]amino]- sulfonyl]benzoate),
trifloxysulfuron (*N*-[[(4,6-dimethoxy-2-pyrimidinyl)amino]carbonyl]-3-(2,2,2-trifluoroethoxy)-2-pyridinesulfonamide),
triflusulfuron-methyl (methyl 2-[[[[[4-dimethylamino)-6-(2,2,2-trifluoroethoxy)-1,3,5-triazin-2-yl]amino]carbonyl]amino]-sulfonyl]-3-methylbenzoate) and
tritosulfuron (*N*-[[[4-methoxy-6-(trifluoromethyl)-1,3,5-triazin-2-yl]amino]carbonyl]-2-(trifluoromethyl)benzenesulfonamide).

Other sulfonylureas (e.g. propyrisulfuron: 2-chloro-*N*-[[(4,6-dimethoxy-2-pyrimidinyl)amino]carbonyl]-6-propylimidazo[1,2-*b*]pyridazine-3-sulfonamide) that are mentioned in the art (e.g. WO 2014/018410 A1 (Dow Agrosciences; WO 2012/175899 A1 (Syngenta Ltd.)) can also be used for this invention.

Preferred salts of the sulfonylureas mentioned above include the sodium salt thereof and the potassium salt thereof.

At least one sulfonylurea is preferably comprised in the liquid compositions of the invention in an amount of at least 0.1 wt.% based on the total weight of the liquid composition. More preferably, the sulfonylurea is comprised in an amount of at least 0.2 wt.%, at least 0.5 wt.%, at least 0.7 wt.%, at least 1 wt.%, or at least 2 wt.%. It has been found that increasing the amount of sulfonylurea can improve its chemical stability. At least one sulfonylurea is present in an amount of 10 wt.% or less, preferably in an amount of 8 wt.% or less, 6 wt.% or less, 5 wt.% or less, 3 wt.% or less or 2 wt.% or less. Decreasing the amount of sulfonylurea allows it to be formulated with other less active ingredients that must be present in comparatively larger amounts. Any of the preferred lower wt.% limits for the amount of sulfonylurea can be combined with any of the preferred upper wt.% limits to define further suitable wt.% ranges for the present invention. As an example, further exemplary ranges for the amount of at least one sulfonylurea in the liquid composition include 0.1 to 10 wt.%, 0.5 to 10 wt.%, 1 to 10 wt.%, 2 to 10 wt.%, 0.1 to 8 wt.%, 0.1 to 5 wt.%, 0.1 to 3 wt.%, 0.1 to 2 wt.%, 0.5 to 3 wt.% and 0.5 to 2 wt.%.

The composition may comprise more than one sulfonylurea herbicide, in which case at least one sulfonylurea is present in an amount of 10 wt.% or less based on the liquid composition, and preferably in the amounts described in the preceding paragraph. Further sulfonylurea herbicides in the composition may be present in any practical amount. When the liquid composition comprises more than one sulfonylurea herbicide, the total amount of sulfonylurea herbicide in the liquid composition is preferably 30 wt.% or less. More preferably, the total amount of sulfonylurea herbicide in the liquid composition is 25 wt.% or less, 20 wt.% or less, or 10 wt.% or less. The total amount of sulfonylurea herbicide in the liquid composition may be 0.1 to 30 wt.%, 0.1 to 25 wt.%, 0.1 to 20 wt.% 0.1 to 10 wt.%, 0.5 to 30 wt.%, 1 to 20 wt.%, 2 to 10 wt.%, 0.1 to 8 wt.%, 0.1 to 5 wt.%, 0.1 to 3 wt.%, 0.1 to 2 wt.%, 0.5 to 3 wt.% and 0.5 to 2 wt.%.

When the sulfonylurea is used in a modified form such as its salt, ester or otherwise then the wt.% amounts that are described herein refer to the weight amount of the modified sulfonylurea.

When the liquid composition is an oil dispersion of a sulfonylurea, then it is preferable that the sulfonylurea that is present in an amount of 10 wt.% or less has a particle size (D50) of at least 100 nm or more, at least 200 nm or more, at least 500 nm or more, at least 1 µm or more, at least 2 µm or more, or at least 3 µm or more as a particle size less than this can generate excess heat during milling and possibly degrade the sulfonylurea. Preferably, the sulfonylurea has a particle size (D50) of 30 µm or less, 15 µm or less, 10 µm or less, 7 µm or less, 5 µm or less, 3 µm or less, 1 µm or less, 500 nm or less. Any of the preferred lower limits for the sulfonylurea particle size can be combined with any of the preferred upper limits to define further suitable particle size ranges for the present invention. As an example, further exemplary ranges for the particle size (D50) of the sulfonylurea include 0.1-30 µm, 0.2-15 µm, 0.5-10 µm, 0.1-0.5 µm, 0.2-1 µm, 0.5-3 µm, 1-15 µm, 1-10 µm, 1-7 µm, 2-15 µm, 2-10 µm, 2-7 µm, 3-15 µm, 3-10 µm, and 3-7 µm. D50 refers to the volume median particle size and can be determined by laser light scattering using the method described in CIPAC MT187.

As discussed above, the liquid composition of the invention may comprise more than one sulfonylurea herbicide compound. The liquid composition may comprise any combination of sulfonylureas as disclosed herein. For example, the liquid composition may comprise tribenuron-methyl in an amount of 10 wt.% or less and any other sulfonylurea described herein; the liquid composition may comprise metsulfuron-methyl in an amount of 10 wt.% or less and any other sulfonylurea described herein; the liquid composition may comprise nicosulfuron in an amount of 10 wt.% or less and any other sulfonylurea described herein; the liquid composition may comprise iodosulfuron in an amount of 10 wt.% or less and any other sulfonylurea described herein; or the liquid composition may comprise halosulfuron-methyl in an amount of 10 wt.% or less and any other sulfonylurea described herein. Further exemplary combinations of sulfonylureas for use in the present invention include: amidosulfuron and iofensulfuron (optionally as the sodium salt); nicosulfuron and rimsulfuron; nicosulfuron and thifensulfuron methyl; nicosulfuron and prosulfuron; metsulfuron methyl and iodosulfuron methyl (optionally as the sodium salt); metsulfuron methyl and sulfosulfuron; metsulfuron methyl and thifensulfuron methyl; metsulfuron methyl and bensulfuron methyl; metsulfuron methyl and chlorsulfuron; metsulfuron methyl and chlorimuron ethyl; metsulfuron methyl and tribenuron-methyl; tribenuron-methyl and bensulfuron-methyl; tribenuron-methyl and thifensulfuron methyl; metsulfuron methyl, tribenuron-methyl and thifensulfuron methyl; tribenuron-methyl and chlorimuron ethyl; tribenuron-methyl and mesosulfuron (optionally as mesosulfuron methyl); tribenuron-methyl and iodosulfuron-methyl (optionally as the sodium salt); iodosulfuron methyl (optionally as the sodium salt) and mesosulfuron; iodosulfuron methyl (optionally as the sodium salt) and mesosulfuron methyl; iodosulfuron methyl (optionally as the sodium salt) and amidosulfuron; iodosulfuron methyl (optionally as the sodium salt) and foramsulfuron; iofensulfuron (optionally as the sodium salt) and iodosulfuron; mesosulfuron (and/or as the methyl ester) and iodosulfuron methyl; foramsulfuron and iodosulfuron-methyl (optionally as the sodium salt); rimsulfuron and thifensulfuron; bensulfuron-methyl and thifensulfuron-methyl; thifensulfuron-methyl and chlorimuron-ethyl. In the above combinations, the first-mentioned sulfonylurea herbicide for any given combination is present in an amount of 10 wt.% or less based on the weight of the liquid composition. Alternatively, in the above combinations, the second-mentioned sulfonylurea herbicide is present in an amount of 10 wt.% or less based on the weight of the liquid composition. In the case of a triple combination, the third-mentioned sulfonylurea herbicide can be present in an amount of 10 wt.% or less based on the weight of the liquid composition. In still a further embodiment, each sulfonylurea herbicide in the combinations listed above is present in an amount of 10 wt.% or less based on the weight of the liquid composition.

Finally, while the liquid composition of the invention may contain one or more of the sulfonylureas as disclosed herein, it is also contemplated that the invention extends to liquid compositions where one or more of the sulfonylureas as disclosed herein are excluded. In other words, where the definition of a liquid composition as disclosed herein does not expressly mention a specific sulfonylurea, including the liquid compositions as defined in the appended claims, then the invention extends to a liquid composition where that specific sulfonylurea is excluded, subject to there being at least one sulfonylurea in the liquid composition. By way of example, for any of the liquid compositions as defined herein that do not expressly call for the presence of nicosulfuron and/or iodosulfuron, the invention extends to that liquid composition expressly excluding nicosulfuron and/or iodosulfuron.

### 4.5 Surfactants

The total amount of surfactant in the liquid composition of the invention is preferably 5 wt.% or more, and can be 7.5 wt.% or more, 10 wt.% or more, 12.5 wt.% or more, 15 wt.% or more, 17.5 wt.% or more, or 20 wt.% or more. The total amount of surfactant in the liquid composition of the invention is preferably 30 wt.% or less, and can be 25 wt.% or less, 20 wt.% or less, 17.5 wt.% or less or 15 wt.% or less. Preferred ranges for the total amount of surfactant include those where any of the lower limits of 5 wt.% or more, 7.5 wt.% or more, 10 wt.% or more, 12.5 wt.% or more, or 15 wt.% or more are combined with the upper limits of 30 wt.% or less, 25 wt.% or less, or 20 wt.% or less. For example, preferred ranges for the total amount of surfactant in the liquid composition include 5-30 wt.%, 5-20 wt.%, 7.5-30 wt.%, 7.5-20 wt.%, 10-30 wt.%, 10-25 wt.%, 10-20 wt.%, 10-17.5 wt.%, 10-15 wt.%, 12.5-30 wt.%, 12.5-25 wt.%, 12.5-20 wt.%, 12.5-17.5 wt.%, 15-30 wt.%, 15-25 wt.%, and 15-20 wt.%. It should be noted that commercial surfactants are sometimes provided in a liquid carrier (e.g. an organic solvent). If such surfactants are used to prepare liquid formulations of the invention, the amount of the actual surfactant (i.e. without the carrier or any other non-surfactant ingredients) should be considered when calculating the total amount of surfactant in the composition.

At least 80 wt.% and up to 100 wt.% of the total amount of surfactant in the liquid composition is made up from surfactants selected from the surfactant classes listed below:

| | |
|---|---|
| Class 1 | Alkyl end-capped fatty alcohol ethoxylates |
| Class 2 | Alkylbenzene sulfonates having a counter ion that does not contain nitrogen; |
| Class 3 | Metallic stearates; |
| Class 4 | Fatty acid-polyalkylene glycol ABA-block copolymers |
| Class 5 | Fatty alcohol alkoxylates; |
| Class 6 | Fatty acid alkoxylates; |
| Class 7 | Ethoxylated castor oil; |
| Class 8 | Sorbitan esters; |
| Class 9 | Ethoxylated sorbitan esters; |
| Class 10 | EO/PO/EO Block copolymer; |
| Class 11 | Tristyrylphenol ethoxylates; |
| Class 12 | Tristyrylphenol ethoxylates sulphate esters having a counter ion that does not contain nitrogen; |
| Class 13 | Tristyrylphenol ethoxylates phosphate esters having a counter ion that does not contain nitrogen; and |
| Class 14 | Ethoxylated alkyl phosphate esters having a counter ion that does not contain nitrogen. |

The inventors have discovered that stability of the sulfonylurea herbicide is significantly improved when at least 80 wt.% of the total amount of surfactant in the liquid composition is made up from surfactants of the surfactant classes 1-14 listed above. The invention allows for other surfactants to be present, albeit in a comparatively minor amount (maximum 20 wt.% of the total amount of surfactant) compared to the total amount of surfactant from surfactant classes 1-14. Allowing a minor amount of other surfactants provides increased flexibility to tailor the overall surfactant properties within the liquid composition to a desired need. That said, the surfactant classes listed above provide sufficient flexibility to tailor the overall surfactant properties of the liquid composition for commercial and practical purposes. Therefore, in the interest of further improving stability of the sulfonylurea, it is preferable that at least 85 wt.% of the total amount of surfactant in the liquid herbicidal composition is made up of surfactants from the surfactant classes listed above, more preferably at least 90 wt.%, still more preferably at least 95 wt.%, still more preferably 99 wt.%, and in other embodiments all of the surfactants in the liquid herbicidal composition are selected from the surfactant classes 1-14 listed above.

The liquid composition comprises at least two different classes of surfactants 1-14, with each of the two different classes accounting for at least 10 wt.% of the total amount of surfactant in the liquid composition. This ensures that there is an appreciable amount of surfactant from two different surfactant classes in the liquid composition. The inventors have found that combining two or more surfactant classes 1-14 allows for a surfactant system with better surfactant properties that can be tailored as required while improving stability of the sulfonylurea herbicide. For example, the liquid composition may comprise a surfactant with good dispersing properties (such as those in classes 1-4) and a surfactant with good emulsifying properties (such as those in classes 5-14), thereby providing a composition with good dispersing and emulsifying properties. By way of example, the liquid composition may comprise 70 wt.% of a surfactant from Class 1 and comprise 10 wt.% of a surfactant from Class 8, based on the total amount of surfactant in the liquid composition. In this example 80 wt.% of the total amount of surfactant in the liquid composition is selected from the surfactant classes 1-14 (in this example the remaining 20 wt.% of surfactant could be surfactants that do not fall within classes 1-14, or could be surfactants falling within classes 1-14, or could be a mixture of both). In this example, at least two different surfactant classes 1-14 each account for at least 10 wt.% of the total amount of surfactant in the liquid composition (Class 1 accounts for 70 wt.%; Class 8 accounts for 10 wt.%).

The liquid composition may comprise three surfactants from three different surfactant classes 1-14, four surfactants from four different surfactant classes 1-14, or five surfactants from five different surfactant classes 1-14, and so on. In each of these cases, the combined amount of surfactant from surfactant classes 1-14 is 80 wt.% or more of the total surfactant content, and at least two surfactant classes (or optionally all three, four, five, and so on) separately account for 10 wt.% or more of the total amount of surfactant in the composition. By way of example, the liquid composition may comprise 70 wt.% of a surfactant from Class 1, 10 wt.% of a surfactant from Class 8, and 5 wt.% of a surfactant from Class 10, based on the total amount of surfactant in the liquid composition. In this case, 85 wt.% of the total amount of surfactant in the liquid composition is selected from the classes of surfactants 1-14, and at least two different surfactant classes 1-14 account for at least 10 wt.% of the total amount of surfactant in the liquid composition (i.e. Class 1 accounts for 70 wt.%; Class 8 accounts for 10 wt.%). In this example surfactant class 10 does not account for at least 10 wt.% of the total amount of surfactant in the liquid composition (it accounts for 5 wt.%) but this is acceptable since at least two other surfactant classes (i.e. Class 1 and Class 8) each account for 10 wt.% or more of the total amount of surfactant in the liquid composition. In one embodiment of the invention, the liquid composition may comprise three surfactants from three different surfactant classes 1-14, four surfactants from four different surfactant classes 1-14, or five surfactants from five different surfactant classes 1-14, where each of the three, four or five surfactant classes accounts for 10 wt.% or more of the total amount of surfactant in the liquid composition.

The liquid composition may comprise more than one surfactant per surfactant class. In that case, each surfactant is counted towards the total amount of surfactant in the composition, but the combined amount of surfactants in a particular class is counted towards what that surfactant class contributes to the total amount of surfactant in the composition. By way of example, the liquid composition may comprise three surfactants from two different classes: 70 wt.% of a first surfactant from Class 1, 5 wt.% of a second surfactant from Class 8, and 5 wt.% of a third surfactant also from Class 8. In this example, 80 wt.% of the total amount of surfactant in the liquid composition is selected from the surfactant classes 1-14, and at least two different surfactant classes 1-14 each account for at least 10 wt.% of the total amount of surfactant in the liquid composition (i.e. Class 1 accounts for 70 wt.%; Class 8 accounts for 10 wt.% when the total amount of surfactants from class 8 is considered).

As mentioned above, surfactants from classes 1-4 tend to have good dispersing properties whereas surfactants from classes 5-14 tend to have good emulsifying properties. In a preferred embodiment of the invention, at least one of the surfactant classes 1-4 accounts for at least 10 wt.% of the total amount of surfactant in the liquid composition and at least one of surfactant classes 5-14 accounts for at least 10 wt.% of the total amount of surfactant in the liquid, with the understanding that 80 wt.% to 100 wt.% of the total amount of surfactant in the liquid composition is selected from the surfactant classes 1-14.

In one embodiment, the invention relates to a liquid composition wherein at least one of the surfactant classes 1-4 accounts for 10 wt.% or more of the total amount of surfactant in the liquid composition and at least one of the surfactant classes 5-14 accounts for 10 wt.% or more of the total amount of surfactant in the liquid composition; the surfactant classes 1-4 in total account for 30 to 90 wt.% of the total amount of surfactant in the liquid composition and the surfactant classes 5-14 in total account for 10 to 70 wt.% of the total amount of surfactant in the liquid composition; with the understanding that 80 wt.% to 100 wt.% of the total amount of surfactant in the liquid composition is selected from the surfactant classes 1-14. In this embodiment the surfactant classes 1-4 in total preferably account for 40 to 90 wt.% of the total amount of surfactant in the liquid composition, more preferably 50 to 90 wt.% and still more preferably 60 to 90 wt.%, while the surfactant classes 5-14 in total respectively account for 10 to 60 wt.%, 10 to 50 wt.% or 10 to 40 wt.% of the total amount of surfactant in the liquid composition.

In another embodiment, the invention relates to a liquid composition where surfactant class 1 accounts for 30 to 90 wt.% of the total amount of surfactant in the liquid composition; surfactant classes 5-14 in total account for 10 to 70 wt.% or more of the total amount of surfactant in the liquid composition, with the understanding that at least one of the surfactant classes 5-14 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 1 preferably accounts for 40 to 90 wt.% of the total amount of surfactant in the liquid composition, more preferably 50 to 90 wt.% and still more preferably 60 to 90 wt.%, while the surfactant classes 5-14 in total respectively account for 10 to 60 wt.%, 10 to 50 wt.% or 10 to 40 wt.% of the total amount of surfactant in the liquid composition.

In another embodiment, the invention relates to a liquid composition where surfactant class 2 accounts for 30 to 90 wt.% of the total amount of surfactant in the liquid composition; surfactant classes 5-14 in total account for 10 to 70 wt.% or more of the total amount of surfactant in the liquid composition, with the understanding that at least one of the surfactant classes 5-14 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 2 preferably accounts for 40 to 90 wt.% of the total amount of surfactant in the liquid composition, more preferably 50 to 90 wt.% and still more preferably 60 to 90 wt.%, while the surfactant classes 5-14 in total respectively account for 10 to 60 wt.%, 10 to 50 wt.% or 10 to 40 wt.% of the total amount of surfactant in the liquid composition.

In another embodiment, the invention relates to a liquid composition where surfactant class 3 accounts for 30 to 90 wt.% of the total amount of surfactant in the liquid composition; surfactant classes 5-14 in total account for 10 to 70 wt.% or more of the total amount of surfactant in the liquid composition, with the understanding that at least one of the surfactant classes 5-14 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 3 preferably accounts for 40 to 90 wt.% of the total amount of surfactant in the liquid composition, more preferably 50 to 90 wt.% and still more preferably 60 to 90 wt.%, while the surfactant classes 5-14 in total respectively account for 10 to 60 wt.%, 10 to 50 wt.% or 10 to 40 wt.% of the total amount of surfactant in the liquid composition.

In another embodiment, the invention relates to a liquid composition where surfactant class 4 accounts for 30 to 90 wt.% of the total amount of surfactant in the liquid composition; surfactant classes 5-14 in total account for 10 to 70 wt.% or more of the total amount of surfactant in the liquid composition, with the understanding that at least one of the surfactant classes 5-14 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 4 preferably accounts for 40 to 90 wt.% of the total amount of surfactant in the liquid composition, more preferably 50 to 90 wt.% and still more preferably 60 to 90 wt.%, while the surfactant classes 5-14 in total respectively account for 10 to 60 wt.%, 10 to 50 wt.% or 10 to 40 wt.% of the total amount of surfactant in the liquid composition.

In another embodiment, the invention relates to a liquid composition where surfactant class 5 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 5 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 6 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 6 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 7 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 7 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 8 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 8 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 9 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 9 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 10 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 10 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 11 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 11 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 12 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 12 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 13 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 13 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

In another embodiment, the invention relates to a liquid composition where surfactant class 14 accounts for 10 to 70 wt.% of the total amount of surfactant in the liquid composition; surfactant classes 1-4 in total account for 30 to 90 wt.% or more of the total amount of surfactant in the liquid composition, with the understanding that at least one of the surfactant classes 1-4 accounts for 10 wt.% or more of the total amount of surfactant in the liquid composition and that 80 wt.% to 100 wt.% of the total amount of surfactant in the liquid composition is selected from the surfactant classes 1-14. In this embodiment the surfactant class 14 preferably accounts for 10 to 60 wt.%, 10 to 50 wt.% or 10 to 40 wt.% of the total amount of surfactant in the liquid composition, while the surfactant classes 1-4 in total respectively account for 40 to 90 wt.%, 50 to 90 wt.% or 60 to 90 wt.% of the total amount of surfactant in the liquid composition.

The surfactant classes of the invention as listed above will now be described in more detail and representative examples of each are provided. It is to be understood that for any of the embodiments described thus far, the invention also relates to those embodiments where the surfactant classes are as described in detail below.

### Class 1. Alkyl end-capped fatty alcohol alkoxylates

The class 1 surfactants are those that are generally known in the art as the alkyl end-capped fatty alcohol alkoxylates, preferably C1-C6-alkyl end-capped fatty alcohol alkoxylates. In a preferred embodiment, and for all embodiments described herein, the alkyl end-capped fatty alcohol alkoxylates can be represented by Formula (I):

R¹-(EO)ₓ(PO)_{y}(BO)_{z}-O-R² Formula (I)

wherein
R¹ is a linear or branched C8 to C24 alkyl group, preferably a linear or branched C12 to C15 alkyl group;
EO, PO and BO represent an ethoxy group (OC₂H₄), a propoxy group (OC₃H₆) and a butoxy group (OC₄H₈), respectively, and the EO, PO and BO groups are arranged randomly or in a block formation;
the indices x, y and z are each independently an integer from 0 to 50, provided that the sum of x+y+z is from 1 to 150, preferably 3 to 50;
R² is a C1-C6 alkyl group, preferably methyl.

In one embodiment R¹, EO, PO, BO and R² are as described above for Formula (I) but x is 0 to 50, y is 0 to 20 and z is 0 to 15, provided that the sum of x+y+z is from 1 to 95, preferably from 3 to 30. In another embodiment R¹ is a linear C12 to C15 alkyl group, x is from 1 to 50, preferably from 3 to 15, and both y and z are 0 and EO, PO, BO and R² are as described above for Formula (I). In another embodiment R¹ is a linear or branched C12 to C15 alkyl group, EO, PO, and BO are as described above for Formula (I), x is from 3 to 15, y is from 0 to 4 and z is 0, the sum of x+y+z is from 3 to 15, and R² is a C1-C3 alkyl group, preferably methyl. In another embodiment R¹ is a linear C12 to C15 alkyl group, EO, PO, and BO are as described above for Formula (I), x is from 3 to 15, both y and z are 0, and R² is a C1-C3 alkyl group, preferably methyl. In another embodiment R¹ is a linear C12 to C15 alkyl group, EO, PO, and BO are as described above for Formula (I), x is from 6 to 15, both y and z are 0, and R² is methyl. Examples of alkyl end-capped fatty alcohol alkoxylates that can be used include XM products from Clariant such as the methyl ether of iso-tridecylalcohol polyglycol ether with 6 EO (Genapol® XM 060) or with 15 EO (Genapol® XM 0150).

### Class 2. Alkylbenzene sulfonates having a counterion that does not contain nitrogen

The class 2 surfactants are those that are generally known in the art as the alkylbenzene sulfonates. The sulfonate group associates with a counter ion. The inventors have found that alkylbenzene sulfonates with a nitrogen-containing counter ion lead to poorer stabilisation of the sulfonylurea. Accordingly, the class 2 surfactants are alkylbenzene sulfonates where the counter ion does not contain nitrogen. In a preferred embodiment, and for all embodiments described herein, the alkylbenzene sulfonates can be represented by Formula (II): 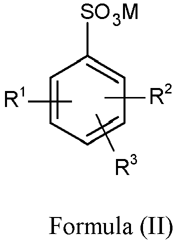 wherein
R¹ is hydrogen or an alkyl group containing from 1 to 3 carbon atoms;
R² is hydrogen or an alkyl group containing from 1 to 3 carbon atoms;
R³ is an alkyl group having from 8 to 40 carbon atoms, and is preferably at the para-position relative to the SO₃M group; and
M is a monovalent or divalent cation, provided that M does not contain a nitrogen atom.

In one embodiment, R¹ and R² are independently hydrogen or methyl and R³ and M are as defined above for Formula (II). In another embodiment both R¹ and R² are hydrogen and R³ and M are as defined above for Formula (II). In another embodiment both R¹ and R² are hydrogen, R³ and M are as defined above for Formula (II), and R3 is at the para-position relative to the SO₃M group. In another embodiment, R¹ and R² are independently hydrogen or methyl, R³ is a linear or branched C8 to C16 alkyl group, and M is as defined above for Formula (II). In another embodiment, R¹, R² and R³ are as defined in Formula (II) or any of the preceding embodiments and M is an alkali metal ion, an alkaline earth metal ion, or a Zn ion. In Formula (II) or any of the preceding embodiments, R³ can be attached to the benzene ring at any carbon atom of the alkyl chain. Preferably R³ is a linear alkyl group such that the alkylbenzene sulfonate is a linear alkylbenzene sulfonate (often abbreviated in the art as LAS). R³ can also be a branched alkyl group such that the alkylbenzene sulfonate is a branched alkylbenzene sulfonate (often abbreviated in the art as BAS). In Formula (II) or any of the preceding embodiments, preferred alkali metals for M are lithium, sodium or potassium and preferred alkaline earth metals for M are calcium or magnesium. In Formula (II) or any of the preceding embodiments, M is preferably sodium or calcium. In a preferred embodiment the alkyl benzene sulfonate is the sodium or calcium salt of the alkylbenzene sulfonate where R¹ and R² are both H and R³ is a C10-C14 alkyl group. In this embodiment it is further preferred that R³ is at the para-position relative to the SO₃M group. In this embodiment it is further preferred that the C10-C14 alkyl group is a linear C10, linear C11, linear C12, linear C13 or linear C14 alkyl group.

Examples of suitable commercial alkylbenzene sulfonates include, but are not limited to, Ninate® 411, Bio-Soft® N-411, Bio-Soft® 411-E, Bio-Soft® D-40, Bio-Soft® D-62-L, Bio-Soft® N-300, Ninate® 60E, Ninate® 60L, Ninate® 70B, and Ninate® 401-A (all from Stepan; Northfield, IL); Nansa® EVM 50/NS, Nansa® EVM 62/H, Nansa® EVM 62/N, Nansa® EVM 62/S, Nansa® EVM 63/B, Nansa® EVM 70/B, Nansa® EVM 70/13, Nansa® EVM 70/2E, Nansa® YS 94, Nansa® TS 50/F, and Nansa® AS/1 (all from Huntsman International LLC; The Woodlands, TX); Calsogen® EH, Calsogen® 4814, Phenylsulfonat CA, Phenylsulfonat CA 62, and Phenylsulfonat CAL (all from Clariant; Charlotte, NC). Most preferred alkyl benzene sulfonates are the sodium or calcium salts of linear dodecyl benzene sulfonic acid, in particular Rhodacal® 70/B (calcium dodecyl benzene sulfonate), Rhodacal® 60/BE (calcium dodecyl benzene sulfonate) of Rhodia GmbH (formerly Rhône-Poulenc), Phenylsulfonat CA 100 (calcium dodecyl benzene sulfonate) of Clariant GmbH or Nansa® EVM 70/2E (calcium linear dodecyl benzene sulfonate) of Huntsman, Nansa® EVM 40/2ND (branched alkyl benzene sulfonate), and Nansa® EVM 40/2NDL (linear alkyl benzene sulfonate).

### Class 3. Metallic stearates

The class 3 surfactants are those that are generally known in the art as metallic stearates (or metal stearates). In a preferred embodiment, and for all embodiments described herein, the metallic stearates may be sodium stearate, calcium stearate, zinc stearate, magnesium stearate or aluminium stearate.

### Class 4. Fatty acid-polyalkylene glycol ABA-block copolymers

The class 4 surfactants are ABA-block copolymers of a fatty acid and a polyalkylene glycol. In a preferred embodiment, and for all embodiments described herein, the ABA-block copolymers may be those having the general formula A-COO-B-OOC-A, in which B is the divalent residue of a water-soluble polyalkylene glycol and A is the residue of a fatty acid with a molecular weight of at least 500. In a preferred embodiment, the ABA-block copolymers are those having the general formula A-COO-B-OOC-A, in which A and B are as defined below.

In a preferred embodiment A is represented by Formula (IV-A): 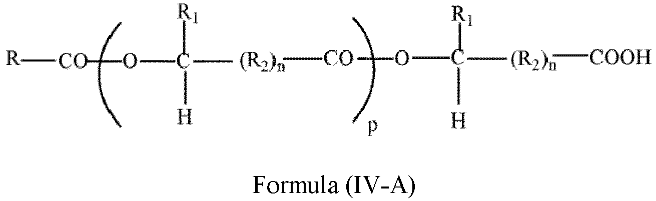 wherein
R is hydrogen or a monovalent hydrocarbon or substituted hydrocarbon group;
R₁ is hydrogen or a monovalent C1 to C24 hydrocarbon group, preferably a C1-C24 alkyl group;
R₂ is a divalent C1 to C24 hydrocarbon group, preferably a C1-C24 alkyl group;
n is zero or 1;
p is an integer from 0 to 200.
The units between the brackets in the formula above may be all the same or they may differ in respect of R₁, R₂ and n. The hydrocarbons R, R₁, and R₂ may be linear or branched.

In a preferred embodiment B has a molecular weight of at least 500 and is the divalent residue of a water-soluble polyalkylene glycol having the Formula (IV-B): 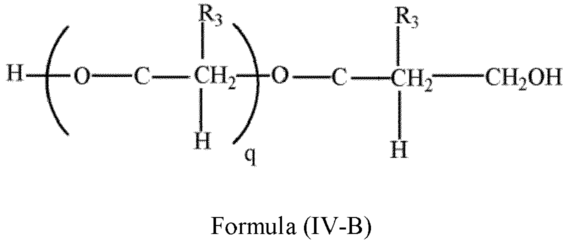 wherein
R₃ is hydrogen or a C1 to C3 alkyl group;
q is an integer from 10 to 500.

The repetitive units in polymeric component B may all be the same or may differ with respect to R₃. Preferably in the block copolymers of formula A-COO-B-OOC-A, component B is derived from polyethylene glycol and components A are derived from stearic acid, for example polyhydroxystearic acid, preferably from poly(12-hydroxy-stearic acid).

Thus, R may be a straight chain C₁₇H₃₅ group derived from stearic acid, and the unit containing R₁ and R₂ may be derived from 12-hydroxy-stearic acid. p, in this case, preferably has a value of at least 2. Preferably q may have a value between 20 and 60, more preferably above 23. The weight ratio of the combined components A to the component B (A:B) is preferably in the range from 9:1 to 1:9.

Examples of commercially available ABA-type polymeric surfactants as described above are Arlacel P135, a PEG 30 dipolyhydroxystearate. Another, similar, surfactant for use in the invention is Atlox 4912. Both Arlacel P135 and Atlox 4912 are block copolymers (A-B-A) of polyethylene glycol and polyhydroxystearic acid with a molecular weight of approximately 5000 and are commercially available from Croda. Another example of such a polymeric surfactant is the commercial surfactant Termul™ 2510 (Huntsman).

### Class 5. Fatty alcohol alkoxylates

The class 5 surfactants are those that are generally known in the art as the fatty alcohol alkoxylates. In a preferred embodiment, and for all embodiments described herein, the fatty alcohol alkoxylates may be represented by Formula (V):

R¹-(EO)ₓ(PO)_{y}(BO)_{z}-OH Formula (V)

wherein
R¹ is a linear or branched C8 to C24 alkyl group, preferably a linear or branched C12 to C15 alkyl group;
EO, PO and BO represent an ethoxy group (OC₂H₄), a propoxy group (OC₃H₆) and a butoxy group (OC₄H₈), respectively, and the EO, PO and BO groups are arranged randomly or in a block formation; and
the indices x, y and z are each independently an integer from 0 to 50, provided that the sum of x+y+z is from 1 to 150, preferably 3 to 50.

In one embodiment R¹, EO, PO, and BO are as described above for Formula (V) but x is 0 to 50, y is 0 to 20 and z is 0 to 15, provided that the sum of x+y+z is from 1 to 95, preferably from 3 to 30. In another embodiment R¹ is a linear C12 to C15 alkyl group, x is from 1 to 50, preferably from 3 to 15, and both y and z are 0 and EO, PO, and BO are as described above for Formula (V). In another embodiment R¹ is a linear or branched C12 to C15 alkyl group, EO, PO, and BO are as described above for Formula (V), x is from 3 to 15, y is from 0 to 4, z is 0, and the sum of x+y+z is from 3 to 15. In another embodiment R¹ is a linear C12 to C15 alkyl group, EO, PO, and BO are as described above for Formula (V), and x is from 3 to 15, both y and z are 0. In another embodiment R¹ is a linear C12 to C15 alkyl group, EO, PO, and BO are as described above for Formula (V), x is from 6 to 15, and both y and z are 0.

Examples of fatty alcohol alkoxylates that can be used include: Genapol® C, EP, LA, O, OA, OX, T, UD, and X products from Clariant such as iso-tridecylalcohol polyglycol ether with 3 EO (Genapol® X 030), with 5 EO (Genapol® X 050), with 6 EO (Genapol® X 060; with 8 EO (Genapol® X080), with 9 EO (Genapol® X 090), with 10 EO (Genapol® X 100), with 15 EO (Genapol® X 150; or C12-C15 alkoxylated ether with 8 EO and 4 PO (Genapol® EP2584), Synperonic® A products from Croda such as C12-C15 polyglycol ether with 3 EO (Synperonic® A3), with 7 EO (Synperonic® A7), with 11 EO (Synperonic® A11), Plurafac® and Lutensol®A, AT, ON, and TO products from BASF, Agnique® FOH products from Cognis, Ethylan® products from Akzo-Nobel, and Empilan® products from Huntsman, Termul™ 5429 (from Huntsman International); Tergitol™ 15-S-3, Tergitol™ 15-S-7, Tergitol™ 15-S-9, Tergitol™ 15-S-12, Tergitol™ 15-S-15, Tergitol™ 15-S-20, Tergitol™ 15-S-30, and Tergitol™ 15-S- 40 (all from The Dow Chemical Co.). Other examples include polyoxyalkylenated C2-C18 aliphatic alcohols comprising from 2 to 50 oxyalkylene (oxyethylene and/or oxypropylene) units, in particular of those with 12 (mean) carbon atoms or with 18 (mean) carbon atoms; mention may be made of Antarox B 12DF, Antarox FM33, Antarox FM63 and Antarox V74, Rhodasurf ID 060, Rhodasurf ID 070 and Rhodasurf LA 42 from (Rhodia), as well as polyoxyalkylenated C8-C22 aliphatic alcohols containing from 1 to 25 oxyalkylene (oxyethylene or oxypropylene) units.

### Class 6. Fatty acid alkoxylates

The class 6 surfactants are those that are generally known in the art as the fatty acid alkoxylates. In a preferred embodiment, and for all embodiments described herein, the fatty acid alkoxylates may be represented by Formula (VI):

R¹-COO-(EO)ₓ(PO)_{y}(BO)_{z}-R² Formula (VI)

wherein
R¹ is a linear or branched C7 to C23 alkyl group, preferably a linear or branched C11 to C17 alkyl group;
EO, PO and BO represent an ethoxy group (OC₂H₄), a propoxy group (OC₃H₆) and a butoxy group (OC₄H₈), respectively, and the EO, PO and BO groups are arranged randomly or in a block formation;
the indices x, y and z are each independently an integer from 0 to 50, provided that the sum of x+y+z is from 1 to 150, preferably 3 to 50;
R² is hydrogen (i.e. a mono fatty acid alkoxylate) or C(=O)R³ (i.e. a di-fatty acid alkoxylate) where R³ is a linear or branched C7 to C23 alkyl group, preferably a linear or branched C11 to C17 alkyl group.

In one embodiment R¹, EO, PO, BO and R² are as described above for Formula (VI) but x is 0 to 50, y is 0 to 20 and z is 0 to 15, provided that the sum of x+y+z is from 1 to 95, preferably from 3 to 30. In another embodiment R¹ is a linear C11 to C17 alkyl group, x is from 1 to 50, preferably from 3 to 15, and both y and z are 0 and EO, PO, BO and R² are as described above for Formula (VI). In another embodiment R¹ is a linear or branched C11 to C17 alkyl group, EO, PO, and BO are as described above for Formula (VI), x is from 3 to 15, y is from 0 to 4 and z is 0, the sum of x+y+z is from 3 to 15, and R² is H or C(=O)R³ where R³ is a C11-C17 alkyl group. In another embodiment R¹ is a linear C11 to C117 alkyl group, EO, PO, and BO are as described above for Formula (VI), x is from 3 to 15, both y and z are 0, and R² is H or C(=O)R³ where R³ is a C11-C17 alkyl group. In another embodiment R¹ is a linear C11 to C17 alkyl group, EO, PO, and BO are as described above for Formula (VI), x is from 6 to 15, both y and z are 0, and R² is H or C(=O)R³ where R³ is a C11-C17 alkyl group.

Examples of fatty acid alkoxylates that can be used include: POE monolaurate, POE dilaurate, POE monooleate, POE dioleate, POE monostearate, POE distearate, POE monoisostearate, POE diisostearate, POE monopalmitate, POE dipalmitate, POE monomyristate, POE dimyristate, POE di-2-ethylhexoate, and POE dierucate, where POE represents a polyoxyethylene degree of 3 to 15. In one example the surfactant is POE-8 monostearate or POE-8 distearate. Commercial examples include Pegnol 24-O, 14-0 and EDS(S) (each manufactured by Toho Chemical Industry), Agnique PEG 200ML, 600ML, 200MO, 260MO, 300MO, 400MO, 600MO, 400MS, 660MS, 300DO, 400DO, 600DO and 200DL (each manufactured by BASF), Cithrol 4MS, 10MS, 4ML, 6ML, 2DO, 2DE, 4DL and 4DS as well as Myrj S8 (PEG-8 stearate), Myrj S40 (PEG-40 stearate), Myrj S50 (PEG-50 stearate), or Myrj 59 (PEG-100 stearate) (each manufactured by Croda), Nikkol MYL-10, MYS-10, MYS-45 and MYO-10 (each manufactured by Nikko Chemicals), Nonion L-2, L-4, O-2, O-4, O-6, S-1, S-2, S-4, S-6, S-10, S-15, MM-4, MM-9, IS-2, IS-4, IS-6, DL-4HN, DP-1.5HN, DO-4HN, DS-4HN, DIS-400 and DIS-600 (each manufactured by NOF Corporation), Ethofat O/15, O/20 and 60/as well as Lionon MO-60, DT-600M, DT-600S and DBH-40 (each manufactured by Lion Corporation).

### Class 7. Ethoxylated castor oil

The class 7 surfactants are those that are generally known in the art as ethoxylates of castor oil. In a preferred embodiment, and for all embodiments described herein, the ethoxylated castor oil surfactants may be represented by Formula (VII) or a hydrogenated form thereof: 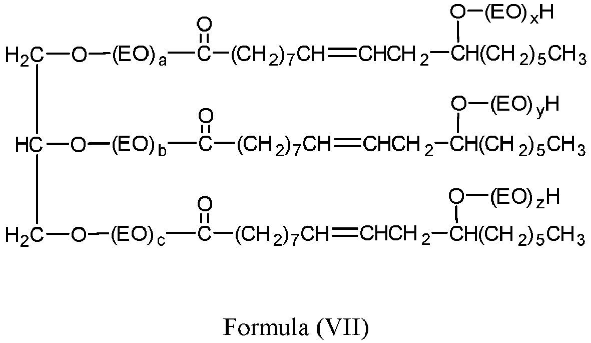 wherein,
EO is an ethylene oxide unit,
each of a, b, and c independently represents an integer of 0 to 300; and
each of x, y and z independently represents an integer of 1 to 300.

In this context, hydrogenated castor oil refers to the castor oil of Formula (VII) in which some, preferably ≥90%, and most preferably all, of the carbon-carbon double bonds contained in the ricinoleic acid residue are hydrogenated. In one embodiment, whether hydrogenated or not, the extent of ethoxylation in Formula (VII) is 3 to 600 (that is, 3 ≤ a+b+c+x+y+z ≤ 600), preferably 3 to 400, more preferably 3 to 200, even more preferably 5 to 60, and still more preferably 10 to 40. In one embodiment of the invention, whether hydrogenated or not, a, b, and c are all 0 and the extent of ethoxylation is derived from x+y+z. For example, in this embodiment a+b+c=0 and the extent of ethoxylation is 3 to 600 (that is, 3 ≤ x+y+z ≤ 600), preferably 3 to 400, more preferably 3 to 200, even more preferably 5 to 60, and still more preferably 10 to 40.

Preferred examples of the ethoxylated castor oil include PEG-8 castor oil, PEG-9 castor oil, PEG-10 castor oil, PEG-11 castor oil, PEG-15 castor oil, PEG-16 castor oil, PEG-20 castor oil, PEG-25 castor oil, PEG-26 castor oil, PEG-29 castor oil, PEG-44 castor oil, PEG-50 castor oil, PEG-54 castor oil, PEG-55 castor oil, PEG-60 castor oil, PEG-75 castor oil, PEG-80 castor oil, PEG-100 castor oil, PEG-200 castor oil, PEG-8 hydrogenated castor oil, PEG-10 hydrogenated castor oil, PEG-16 hydrogenated castor oil, PEG-20 hydrogenated castor oil, PEG-25 hydrogenated castor oil, PEG-35 hydrogenated castor oil, PEG-65 hydrogenated castor oil, PEG-80 hydrogenated castor oil, PEG-100 hydrogenated castor oil, and PEG-200 hydrogenated castor oil.

Examples of ethoxylated castor oil which are commercially available include Etocas 5, Etocas 10 (PEG-10 Castor Oil), Etocas 29, Etocas 32, Etocas 35, and Etocas 40 (PEG-40 Castor Oil), all from Croda, Toximul 8240, Toximul 8241, and Toximul 8242 (all from Stepan); Termul®1283, Termul® 1284, Termul® 1285, Termul® 2507, Termul® 3512, and Termul® 3540 (all from Huntsman International); Emulsogen® EL200, Emulsogen® EL300, Emulsogen® EL360, Emulsogen® EL 400, and Emulsogen® EL 540 (all from Clariant); Alkamulus R81 Alkamulus BR, Alkamulus OR/40 and Alkamulus 14R from (all from Rhodia); Sorpol CA30 and Sorpol CA42 from Toho Chemical Industry, CO-20TX, CO-40TX, CO-50TX, and CO-60TX from Nikko Chemicals, EMALEX C-20, EMALEX C-30, EMALEX C-40 from Nihon Emulsion. Examples of ethoxylated hydrogenated castor oil which are commercially available include Croduret 7, Croduret 25, Croduret 40, Croduret 50, Croduret 60 from Croda, HCO-20, HCO-30, HCO-40 from Nikko Chemicals, and EMALEX HC-20 from Nihon Emulsion.

### Class 8. Sorbitan esters

The class 8 surfactants are those that are generally known in the art as the sorbitan esters. In a preferred embodiment, and for all embodiments described herein, the sorbitan esters may be represented by Formula (VIII): 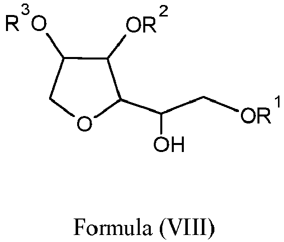 wherein
R¹ is a C10 to C18 saturated or unsaturated fatty acid residue (that is, -(C=O)-C9 to - (C=O)-C17), and
R² and R³ are independently hydrogen or a C10 to C18 saturated or unsaturated fatty acid residue (that is, -(C=O)-C9 to -(C=O)-C17).

R¹, R² and R³ may be the same or different. Preferred fatty acid residues for R¹, R² and R³ include capric acid, lauric acid, myristic acid, palmitic acid, stearic acid, myristoleic acid, malmitoleic acid, oleic acid and linoleic acid. In a preferred embodiment, R² and R³ are both hydrogen, and R¹ is a fatty acid residue selected from lauric acid (i.e. the surfactant is sorbitan laurate), stearic acid (i.e. the surfactant is sorbitan stearate) and oleic acid (i.e. the surfactant is sorbitan oleate). In another preferred embodiment, R¹, R² and R³ are all a fatty acid residue selected from lauric acid (i.e. the surfactant is sorbitan trilaurate), stearic acid (i.e. the surfactant is sorbitan tristearate) and oleic acid (i.e. the surfactant is sorbitan trioleate). Examples of sorbitan esters which can be used for the invention and which are commercially available include Span™ 20, Span™ 40, Span™ 60, Span™ 65, Span™ 80, and Span™ 85 (all from Croda; Edison, NJ).

### Class 9. Ethoxylated sorbitan esters

The class 9 surfactants are those that are generally known in the art as the ethoxylated sorbitan esters. In a preferred embodiment, and for all embodiments described herein, the ethoxylated sorbitan esters may be represented by Formula (IX): 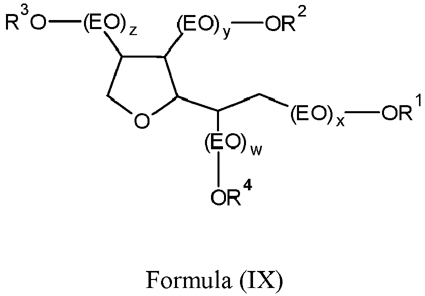 wherein
EO is an ethylene oxide unit,
R¹ is a C10 to C18 saturated or unsaturated fatty acid residue (that is, -(C=O)-C9 to - (C=O)-C17),
R² to R⁴ are independently hydrogen or a C10 to C18 saturated or unsaturated fatty acid residue (that is, -(C=O)-C9 to -(C=O)-C17), and
the extent of ethoxylation is 10 to 40 (that is, 10 ≤ w+x+y+z ≤ 40), preferably 18 to 22, and more preferably is 20.

In a preferred embodiment, w+x+y+z= 18 to 22, preferably 20, R¹ is a C12 to C18 saturated or unsaturated fatty acid residue, and R² to R⁴ are all H. In a still further preferred embodiment, w+x+y+z=20, R¹ is a C18 unsaturated fatty acid residue derived from oleic acid, and R² to R⁴ are all H. Preferred examples ethoxylated sorbitan esters include polyoxyethylene (20) sorbitan monolaurate, polyoxyethylene (20) sorbitan monopalmitate, polyoxyethylene (20) sorbitan monostearate, polyoxyethylene (20) sorbitan monooleate, and sorbitan hexaoleate.

Examples of ethoxylated sorbitan esters which can be used for the invention and which are commercially available include Arlatone™ TV, Atlas™ G-1086 (sorbitan hexaoleate), Atlas™ G-1096, Atlox™ 1045A, Cirrasol™ G-1086, Cirrasol™ G-1096, Tween™ 20, Tween™ 21, Tween™ 40, Tween™ 60, Tween™ 61, Tween™ 65, Tween™ 80 (polyoxyethylene (20) sorbitan monooleate), Tween™ 81, and Tween™ 85 (all from Croda), Toximul® SEE-340, and Toximul® SEE-341 (from Stepan).

### Class 10. EO/PO/EO Block copolymer

The class 10 surfactants are those that are generally known in the art as tri-block copolymers of ethylene oxide (EO) and propylene oxide (PO). These are also sometimes referred to in the art as polyoxylethylene polyoxypropylene block copolymers. In a preferred embodiment, and for all embodiments described herein, the EO/PO/EO block copolymer may be represented by Formula (X):

R¹-(EO)ₓ(PO)_{y}(EO)_{z}-R² (X)

wherein
EO is an ethylene oxide unit and PO is a propylene oxide unit, and EO and PO are arranged in a block formation,
x and z independently range from 2 to 150 and y ranges from 1 to 100,
R¹ is OH, or a linear or branched C1-C20 alkyl or alkenyl group, and
R² is H, or a linear or branched C1-C20 alkyl or alkenyl group.

In the EO/PO block copolymer of Formula (X), it is preferable that x and z independently range from 5 to 100 and y ranges from 10 to 80, it is more preferable that x and z independently range from 8 to 50 and y ranges from 20 to 60 and it is even more preferable that x and z independently range from 10 to 20 and y ranges from 25 to 40. In these preferred embodiments, it is further preferred that x and z are identical. The EO/PO block copolymer of Formula (X) preferably has a weight-average molecular weight ranging from 250 to 19,000, more preferably from 1,000 to 15,000, still more preferably from 1,500 to 10,000 and even more preferably from 1,500 to 5,000. In a preferred embodiment, x and z independently range from 2 to 150 and y ranges from 1 to 100, R¹ is OH, R² is H and the EO/PO block copolymer has a weight-average molecular weight ranging from 250 to 19,000. In another preferred embodiment, x and z independently range from 8 to 50 and y ranges from 20 to 60, R¹ is OH, R² is H. In another preferred embodiment, x and z independently range from 8 to 20 and y ranges from 20 to 40, R¹ is OH, R² is H.

Examples of EO/PO block copolymers which can be used for the invention and which are commercially available include those sold under the name Synperonic, for instance Synperonic® PE/F32 (INCI name: Poloxamer 108), Synperonic® PE/F108 (INCI name: Poloxamer 338), Synperonic® PE/L44 (INCI name: Poloxamer 124), Synperonic® PE/L42 (INCI name: Poloxamer 122), Synperonic® PE/F127 (INCI name: Poloxamer 407), Synperonic® PE/F88 (INCI name: Poloxamer 238), Synperonic® PE/L64 (INCI name: Poloxamer 184), Synperonic® PE/F88 (INCI name: Poloxamer 238), Synperonic® PE/F87 (INCI name: Poloxamer 237) from the company Croda, or Lutrol® F68 (INCI name: Poloxamer 188) from the company BASF.

### Class 11. Tristyrylphenol ethoxylates

The class 11 surfactants are those that are generally known in the art as tristyrylphenol ethoxylates. In a preferred embodiment, and for all embodiments described herein, the tristyrylphenol ethoxylates may be represented by Formula (XI): 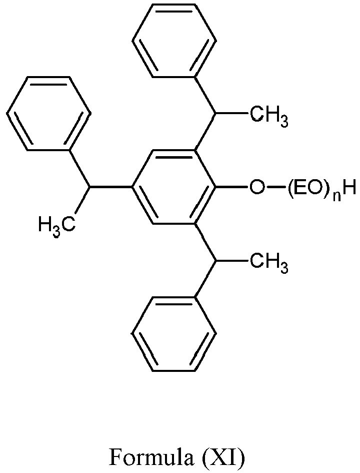 wherein
n is a number from 4 to 150, preferably 10 to 100, more preferably 15 to 60.

Preferred examples are those where n is 15, 16, 19, 20, 36 or 54. A commercially available example of this surfactant having 16 EO is Soprophor® BSU (from Rhodia).

### Class 12. Tristyrylphenol ethoxylate sulphate esters having a counterion that does not contain nitrogen

The class 12 surfactants are those that are generally known in the art as tristyrylphenol ethoxylate sulphate esters. The sulphate group associates with a counter ion. The inventors have found that tristyrylphenol ethoxylate sulphate esters with a nitrogen-containing counter ion lead to poorer stabilisation of the sulfonylurea. Accordingly, the class 12 surfactants are tristyrylphenol ethoxylate sulphate esters where the counter ion does not contain nitrogen. In a preferred embodiment, and for all embodiments described herein, the tristyrylphenol ethoxylate sulphate esters may be represented by Formula (XII): 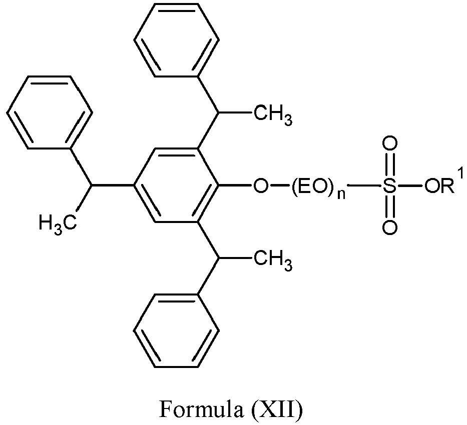 wherein
n is a number from 4 to 150, preferably 10 to 100, more preferably 15 to 60; and
R¹ is a cation, provided that R¹ does not contain a nitrogen atom.

In a preferred embodiment, R¹ is one selected from hydrogen, sodium, or potassium. In a still preferred embodiment, n is a number from 15 to 60 and R¹ is one selected from hydrogen, sodium, or potassium.

An example of a commercially available tristyrylphenol ethoxylate sulphate ester surfactant having a counterion that does not contain nitrogen is Soprophor® 4D384.

### Class 13. Tristyrylphenol ethoxylate phosphate esters having a counterion that does not contain nitrogen

The class 13 surfactants are those that are generally known in the art as tristyrylphenol ethoxylate phosphate esters. The phosphate group associates with a counter ion. The inventors have found that tristyrylphenol ethoxylate phosphate esters with a nitrogen-containing counter ion lead to poorer stabilisation of the sulfonylurea. Accordingly, the class 13 surfactants are tristyrylphenol ethoxylate phosphate esters where the counter ion does not contain nitrogen. In a preferred embodiment, and for all embodiments described herein, the tristyrylphenol ethoxylate phosphate esters may be represented by Formula (XIII): 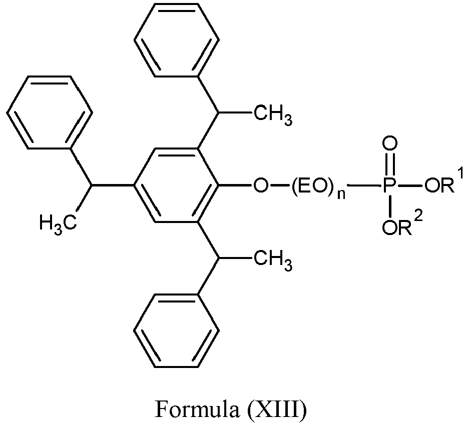 wherein
n is a number from 4 to 150, preferably 10 to 100, more preferably 15 to 60 and
R¹ and R² are independently a cation, provided that neither R¹ nor R² contains a nitrogen atom.

In a preferred embodiment, R¹ and R² are independently selected from hydrogen, sodium, or potassium. In a still preferred embodiment, n is a number from 15 to 60 and R¹ and R² are independently selected from hydrogen, sodium, or potassium.

An example of a tristyrylphenol ethoxylate phosphate ester according to Formula (XIII) is tristyrylphenol-polyglycolether-phosphate ester available as Soprophor® 3D33, as well as tristyrylphenol-polyglycolether-phosphate potassium salt which is available as Soprophor® FLK (all from Rhodia).

### Class 14. Ethoxylated alkyl phosphate esters

The class 14 surfactants are those that are generally known in the art as ethoxylated alkyl phosphate esters. The phosphate group associates with a counter ion. The inventors have found that ethoxylated alkyl phosphate esters with a nitrogen-containing counter ion typically lead to poorer stabilisation of the sulfonylurea. Accordingly, it is preferable to use ethoxylated alkyl phosphate esters where the counter ion does not contain nitrogen. In a preferred embodiment, and for all embodiments described herein, the ethoxylated alkyl phosphate esters may be represented by Formula (XIV): 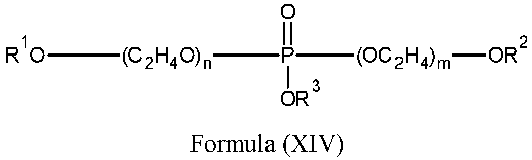 wherein
R¹ is a linear or branched C6 to C24 alkyl or alkenyl group, preferably a linear or branched C8 to C12 alkyl group;
R² is a linear or branched C6 to C24 alkyl or alkenyl group, preferably a linear or branched C8 to C12 alkyl group, or alternatively is a cation, provided that the cation does not contain a nitrogen atom;
R³ is a cation, provided that the cation does not contain a nitrogen atom;
n is 3 to 20; and
m is 0 to 20.

In a preferred embodiment, the cation for R² and R³ of Formula (XIV) is independently selected from hydrogen, sodium, or potassium. In one embodiment, R¹ is C6-C10 linear or branched alkyl group, n is 3 to 8, m is 0 and R² and R³ are independently a cation, preferably selected from hydrogen, sodium, potassium. In a preferred embodiment, R¹ is a C8 alkyl group, n is 5, m is 0 and R² and R³ are as defined above for Formula (XIV). In another preferred embodiment R¹ is a C10 alkyl group, n is 4, m is 0 and R² and R³ are as defined above for Formula (XIV). In another preferred embodiment R¹ is a C11 to C14 alkyl group, n is 6, m is 0 and R² and R³ are as defined above for Formula (XIV). In another embodiment, R¹ is C10-C16 linear or branched alkyl group, n is 3 to 8, m is 3 to 8, R² is C10-C16 linear or branched alkyl group and R³ is a cation, preferably selected from hydrogen, sodium, and potassium. In a preferred embodiment, R¹ is a C11 to C14 alkyl group, n+m=6 and R³ is a cation, preferably hydrogen, sodium, and potassium. Commercial examples of ethoxylated alkyl phosphate esters include Rhodafac RS 610/E (Solvay), Atlox AL-3382 (Croda) and Multitrope 810 (Croda).

### 4.6 Preferred combinations of sulfonylurea and surfactant

As described above, improved stability of the sulfonylurea is achieved where 80 wt.% to 100 wt.% of the total amount of surfactant in the liquid composition is made up of surfactants selected from the surfactant classes 1-14 listed above; and at least two of the surfactant classes 1-14 each account for at least 10 wt.% of the total amount of surfactant in the liquid composition. However, the inventors have found that stability is improved further still if surfactant classes are selected depending on the sulfonylurea in question.

For instance, stability of metsulfuron-methyl is most improved if surfactants are selected from surfactant classes 1 to 13 with best results being obtained for surfactants selected from classes 1, 2, 3, 4, 5, 6, 8, 9, 10, 11, 12 and 13. Therefore, in one aspect the present invention relates to a liquid herbicidal composition comprising: a non-aqueous solvent system; metsulfuron-methyl; and two or more surfactants; characterized in that at least one of the surfactant classes 1-4 accounts for 10 wt.% or more of the total amount of surfactant in the liquid composition and at least one of the surfactant classes 5 to 13 (or more preferably 5, 6, 8, 9, 10, 11, 12, and 13) accounts for 10 wt.% or more of the total amount of surfactant in the liquid composition; the surfactant classes 1-4 in total account for 30 to 90 wt.% of the total amount of surfactant in the liquid composition and the surfactant classes 5 to 13 (or more preferably 5, 6, 8, 9, 10, 11, 12, and 13) in total account for 10 to 70 wt.% of the total amount of surfactant in the liquid composition; with the understanding that 80 wt.% to 100 wt.% of the total amount of surfactant in the liquid composition is selected from the surfactant classes 1 to 13 (or more preferably 1, 2, 3, 4, 5, 6, 8, 9, 10, 11, 12, and 13). In this embodiment the surfactant classes 1-4 in total preferably account for 40 to 90 wt.% of the total amount of surfactant in the liquid composition, more preferably 50 to 90 wt.% and still more preferably 60 to 90 wt.%, while the surfactant classes 5 to 13 (or more preferably 5, 6, 8, 9, 10, 11, 12, and 13) in total respectively account for 10 to 60 wt.%, 10 to 50 wt.% or 10 to 40 wt.% of the total amount of surfactant in the liquid composition.

For the embodiments described in the paragraph immediately above, if the liquid composition contains 0.5 to 2 wt.% metsulfuron-methyl then it is preferable if the surfactant classes 1 to 4 in total account for 30 to 90 wt.% of the total amount of surfactant in the liquid composition, the surfactant classes 5, 6, 8, 9, 10, 11, 12, and 13 in total account for 10 to 70 wt.% of the total amount of surfactant in the liquid composition, and 80 wt.% to 100 wt.% of the total amount of surfactant in the liquid composition is selected from the surfactant classes 1, 2, 3, 4, 5, 6, 8, 9, 10, 11, 12, and 13. It has been observed that liquid formulations containing comparatively lower amounts of metsulfuron-methyl exhibit higher rates of degradation of the sulfonylurea. The surfactants from classes 1, 2, 3, 4, 5, 6, 8, 9, 10, 11, 12, and 13 show the best stabilisation of metsulfuron-methyl at these low concentrations.

Stability of thifensulfuron-methyl is improved if surfactants are selected from surfactant classes 1 to 14. Therefore, in one aspect the present invention relates to a liquid herbicidal composition comprising: a non-aqueous solvent system; thifensulfuron-methyl; and two or more surfactants; characterized in that at least one of the surfactant classes 1-4 accounts for 10 wt.% or more of the total amount of surfactant in the liquid composition and at least one of the surfactant classes 5 to 14 accounts for 10 wt.% or more of the total amount of surfactant in the liquid composition; the surfactant classes 1-4 in total account for 30 to 90 wt.% of the total amount of surfactant in the liquid composition and the surfactant classes 5 to 14 in total account for 10 to 70 wt.% of the total amount of surfactant in the liquid composition; with the understanding that 80 wt.% to 100 wt.% of the total amount of surfactant in the liquid composition is selected from the surfactant classes 1 to 14. In this embodiment the surfactant classes 1-4 in total preferably account for 40 to 90 wt.% of the total amount of surfactant in the liquid composition, more preferably 50 to 90 wt.% and still more preferably 60 to 90 wt.%, while the surfactant classes 5 to 14 in total respectively account for 10 to 60 wt.%, 10 to 50 wt.% or 10 to 40 wt.% of the total amount of surfactant in the liquid composition.

Stability of chlorimuron-ethyl is most improved if surfactants are selected from surfactant classes 1, 2, 3, 4, 5, 7, 8, 9, 10, 11, 12, 13, and 14. Therefore, in one aspect the present invention relates to a liquid herbicidal composition comprising: a non-aqueous solvent system; chlorimuron-ethyl; and two or more surfactants; characterized in that at least one of the surfactant classes 1-4 accounts for 10 wt.% or more of the total amount of surfactant in the liquid composition and at least one of the surfactant classes 5, 7, 8, 9, 10, 11, 12, 13, and 14 accounts for 10 wt.% or more of the total amount of surfactant in the liquid composition; the surfactant classes 1-4 in total account for 30 to 90 wt.% of the total amount of surfactant in the liquid composition and the surfactant classes 5, 7, 8, 9, 10, 11, 12, 13, and 14 in total account for 10 to 70 wt.% of the total amount of surfactant in the liquid composition; with the understanding that 80 wt.% to 100 wt.% of the total amount of surfactant in the liquid composition is selected from the surfactant classes 1, 2, 3, 4, 5, 7, 8, 9, 10, 11, 12, 13, and 14. In this embodiment the surfactant classes 1-4 in total preferably account for 40 to 90 wt.% of the total amount of surfactant in the liquid composition, more preferably 50 to 90 wt.% and still more preferably 60 to 90 wt.%, while the surfactant classes 5, 7, 8, 9, 10, 11, 12, 13, and 14 in total respectively account for 10 to 60 wt.%, 10 to 50 wt.% or 10 to 40 wt.% of the total amount of surfactant in the liquid composition.

For the three sulfonyureas mentioned immediately above, that is, metsulfuron-methyl, thifensulfuron-methyl and chlorimuron-ethyl, the inventors have also found that when choosing a surfactant from any of Classes 1-14, to maximise stability it is preferable to choose a surfactant where the hydroxyl content (-OH) of the surfactant is 6 wt.% or less based on the molecular weight of the surfactant. When choosing a surfactant from Class 13 or 14, it is preferable to choose the diester form.

Stability of bensulfuron is improved if surfactants are selected from surfactant classes 1 to 14, with best results being obtained for surfactants selected from classes 2, 4, 5, 7, 10, 11, 13 and 14. Therefore, in one aspect the present invention relates to a liquid herbicidal composition comprising: a non-aqueous solvent system; bensulfuron; and two or more surfactants; characterized in that at least one of the surfactant classes 1 to 4 (preferably 2 and/or 4) accounts for 10 wt.% or more of the total amount of surfactant in the liquid composition and at least one of the surfactant classes 5 to 14 (preferably 5, 7, 10, 11, 13, and 14) accounts for 10 wt.% or more of the total amount of surfactant in the liquid composition; the surfactant classes 1 to 4 (preferably 2 and/or 4) in total account for 30 to 90 wt.% of the total amount of surfactant in the liquid composition and the surfactant classes 5 to 14 (preferably 5, 7, 10, 11, 13, and 14), in total account for 10 to 70 wt.% of the total amount of surfactant in the liquid composition; with the understanding that 80 wt.% to 100 wt.% of the total amount of surfactant in the liquid composition is selected from the surfactant classes 1 to 14 (preferably 2, 4, 5, 7, 10, 11, 13, and 14). In this embodiment the surfactant classes 1 to 4 (preferably 2 and/or 4) in total preferably account for 40 to 90 wt.% of the total amount of surfactant in the liquid composition, more preferably 50 to 90 wt.% and still more preferably 60 to 90 wt.%, while the surfactant classes 5 to 14 (preferably 5, 7, 10, 11, 12, 13, and 14) in total respectively account for 10 to 60 wt.%, 10 to 50 wt.% or 10 to 40 wt.% of the total amount of surfactant in the liquid composition.

For the embodiments described in the paragraph immediately above, if the liquid composition contains 0.5 to 2 wt.% bensulfuron then it is preferable if the surfactant classes 2 and 4 in total account for 30 to 90 wt.% of the total amount of surfactant in the liquid composition, and the surfactant classes 5, 7, 10, 11, 12, 13, and 14 in total accounts for 10 to 70 wt.% of the total amount of surfactant in the liquid composition, and 80 wt.% to 100 wt.% of the total amount of surfactant in the liquid composition is selected from the surfactant classes 2, 4, 5, 7, 10, 11, 12, 13, and 14. The surfactants from classes 2, 4, 5, 7, 10, 11, 12, 13, and 14 show the best stabilisation of bensulfuron at these low concentrations.

Stability of sulfosulfuron is improved if surfactants are selected from surfactant classes 1 to 14, with best results being obtained for surfactants selected from classes 2, 4, 5, 7, 10, 11, 13 and 14. Therefore, in one aspect the present invention relates to a liquid herbicidal composition comprising: a non-aqueous solvent system; sulfosulfuron; and two or more surfactants; characterized in that at least one of the surfactant classes 1 to 4 (preferably 2 and/or 4) accounts for 10 wt.% or more of the total amount of surfactant in the liquid composition and at least one of the surfactant classes 5 to 14 (preferably 5, 7, 10, 11, 13, and 14) accounts for 10 wt.% or more of the total amount of surfactant in the liquid composition; the surfactant classes 1 to 4 (preferably 2 and/or 4) in total account for 30 to 90 wt.% of the total amount of surfactant in the liquid composition and the surfactant classes 5 to 14 (preferably 5, 7, 10, 11, 13, and 14), in total account for 10 to 70 wt.% of the total amount of surfactant in the liquid composition; with the understanding that 80 wt.% to 100 wt.% of the total amount of surfactant in the liquid composition is selected from the surfactant classes 1 to 14 (preferably 2, 4, 5, 7, 10, 11, 13, and 14). In this embodiment the surfactant classes 1 to 14 (preferably 2 and/or 4) in total preferably account for 40 to 90 wt.% of the total amount of surfactant in the liquid composition, more preferably 50 to 90 wt.% and still more preferably 60 to 90 wt.%, while the surfactant classes 5 to 14 (preferably 5, 7, 10, 11, 13, and 14) in total respectively account for 10 to 60 wt.%, 10 to 50 wt.% or 10 to 40 wt.% of the total amount of surfactant in the liquid composition.

For the embodiments described in the paragraph immediately above, if the liquid composition contains 0.5 to 2 wt.% sulfosulfuron then it is preferable if the surfactant classes 2 and 4 in total account for 30 to 90 wt.% of the total amount of surfactant in the liquid composition, and the surfactant classes 5, 7, 10, 11, 13 and 14 account for 10 to 70 wt.% of the total amount of surfactant in the liquid composition, and 80 wt.% to 100 wt.% of the total amount of surfactant in the liquid composition is selected from the surfactant classes 2, 4, 5, 7, 10, 11, 13 and 14. The surfactants from classes 2, 4, 5, 7, 10, 11, 13, and 14 show the best stabilisation of sulfosulfuron at these low concentrations.

As was the case for metsulfuron-methyl, thifensulfuron-methyl and chlorimuron-ethyl, the inventors found that for bensulfuron and sulfosulfuron, certain members of a surfactant class will stabilise these sulfonylureas to a greater extent than other members of the class. For bensulfuron and sulfosulfuron, when choosing hydroxy-containing group surfactants, it is also preferable to choose surfactants where the hydroxyl content (-OH) of the surfactant is 6 wt.% or less based on the molecular weight of the surfactant. When choosing surfactant from Classes 1-14, it is preferable to choose one that does not contain any nitrogen in the surfactant.

Stability of rimsulfuron is improved if surfactants are selected from surfactant classes 1 to 14 (preferably 2 and/or 4), with best results being obtained for surfactants selected from classes 2, 4, 5, 7, 8, 10, 11, 13 and 14. Therefore, in one aspect the present invention relates to a liquid herbicidal composition comprising: a non-aqueous solvent system; rimsulfuron; and two or more surfactants; characterized in that at least one of the surfactant classes 1 to 4 (preferably 2 and/or 4) accounts for 10 wt.% or more of the total amount of surfactant in the liquid composition and at least one of the surfactant classes 5-14 (preferably 5, 7, 8, 10, 11, 13 and 14) accounts for 10 wt.% or more of the total amount of surfactant in the liquid composition; the surfactant classes 1 to 4 (preferably 2 and/or 4) in total account for 30 to 90 wt.% of the total amount of surfactant in the liquid composition and the surfactant classes 5-14 (preferably 5, 7, 8, 10, 11, 13 and 14), in total account for 10 to 70 wt.% of the total amount of surfactant in the liquid composition; with the understanding that 80 wt.% to 100 wt.% of the total amount of surfactant in the liquid composition is selected from the surfactant classes 1 to 14 (preferably 2, 4, 5, 7, 8, 10, 11, 13 and 14). In this embodiment the surfactant classes 1 to 4 (preferably 2 and/or 4) in total preferably account for 40 to 90 wt.% of the total amount of surfactant in the liquid composition, more preferably 50 to 90 wt.% and still more preferably 60 to 90 wt.%, while the surfactant classes 5-14 (preferably 5, 7, 8, 10, 11, 13 and 14) in total respectively account for 10 to 60 wt.%, 10 to 50 wt.% or 10 to 40 wt.% of the total amount of surfactant in the liquid composition.

For the embodiments described in the paragraph immediately above, if the liquid composition contains 0.5 to 2 wt.% rimsulfuron then it is preferable if the surfactant classes 2 and 4 in total account for 30 to 90 wt.% of the total amount of surfactant in the liquid composition, and the surfactant classes 5, 7, 8, 10, 11, 13 and 14 account for 10 to 70 wt.% of the total amount of surfactant in the liquid composition, and 80 wt.% to 100 wt.% of the total amount of surfactant in the liquid composition is selected from the surfactant classes 2, 4, 5, 7, 8, 10, 11, 13 and 14. The surfactants from classes 2, 4, 5, 7, 8, 10, 11, 13, and 14 show the best stabilisation of rimsulfuron at these low concentrations.

Stability of amidosulfuron is improved if surfactants are selected from surfactant classes 1 to 14 (preferably 2, 4, 5, 7 and 11). Therefore, in one aspect the present invention relates to a liquid herbicidal composition comprising: a non-aqueous solvent system; amidosulfuron; and two or more surfactants; characterized in that at least one of the surfactant classes 1 to 4 (preferably 2 and/or 4) accounts for 10 wt.% or more of the total amount of surfactant in the liquid composition and at least one of the surfactant classes 5-14 (preferably 5, 7 and 11) accounts for 10 wt.% or more of the total amount of surfactant in the liquid composition; the surfactant classes 1 to 4 (preferably 2 and/or 4) in total account for 30 to 90 wt.% of the total amount of surfactant in the liquid composition and the surfactant classes 5-14 (preferably 5, 7 and 11), in total account for 10 to 70 wt.% of the total amount of surfactant in the liquid composition; with the understanding that 80 wt.% to 100 wt.% of the total amount of surfactant in the liquid composition is selected from the surfactant classes 1 to 14 (preferably 2, 4, 5, 7 and 11). In this embodiment the surfactant classes 1 to 4 (preferably 2 and/or 4) in total preferably account for 40 to 90 wt.% of the total amount of surfactant in the liquid composition, more preferably 50 to 90 wt.% and still more preferably 60 to 90 wt.%, while the surfactant classes 5-14 (preferably 5, 7 and 11) in total respectively account for 10 to 60 wt.%, 10 to 50 wt.% or 10 to 40 wt.% of the total amount of surfactant in the liquid composition.

Stability of pyrazosulfuron is improved if surfactants are selected from surfactant classes 1 to 14, with best results being obtained for surfactants selected from classes 1, 2, 4, 5, 7, 8, 10, 11, 13 and 14. Therefore, in one aspect the present invention relates to a liquid herbicidal composition comprising: a non-aqueous solvent system; pyrazosulfuron; and two or more surfactants; characterized in that the surfactant classes 1 to 4 (preferably 1, 2 and 4) in total account for 30 to 90 wt.% of the total amount of surfactant in the liquid composition and the surfactant classes 5 to 14 (preferably 5, 7, 8, 10, 11, 13 and 14) accounts for 10 to 70 wt.% of the total amount of surfactant in the liquid composition; with the understanding that 80 wt.% to 100 wt.% of the total amount of surfactant in the liquid composition is selected from the surfactant classes 1 to 14 (preferably 1, 2, 4, 5, 7, 8, 10, 11, 13 and 14). In this embodiment the surfactant classes 1 to 14 (preferably 1, 2 and 4) in total preferably account for 40 to 90 wt.% of the total amount of surfactant in the liquid composition, more preferably 50 to 90 wt.% and still more preferably 60 to 90 wt.%, while the surfactant classes 5 to 14 (preferably 5, 7, 8, 10, 11, 13 and 14) respectively accounts for 10 to 60 wt.%, 10 to 50 wt.% or 10 to 40 wt.% of the total amount of surfactant in the liquid composition.

For the embodiments described in the paragraph immediately above, if the liquid composition contains 0.5 to 2 wt.% pyrazosulfuron then it is preferable if the surfactant classes 1, 2 and 4 in total account for 30 to 90 wt.% of the total amount of surfactant in the liquid composition, and the surfactant classes 5, 7, 8, 10, 11, 13 and 14 account for 10 to 70 wt.% of the total amount of surfactant in the liquid composition, and 80 wt.% to 100 wt.% of the total amount of surfactant in the liquid composition is selected from the surfactant classes 1, 2, 4, 5, 7, 8, 10, 11, 13 and 14. It has been observed that liquid formulations containing comparatively lower amounts of pyrazosulfuron exhibit higher rates of degradation of the sulfonylurea. The surfactants from classes 1, 2, 4, 5, 7, 8, 10, 11, 13, and 14 show the best stabilisation of pyrazosulfuron at these low concentrations.

Stability of triflusulfuron is most improved if surfactants are selected from surfactant classes 1, 2, 3, 4, 5, 6, 8, 9, 10, 11, 12 and 13 (preferably 2, 4, 5 and 11). Therefore, in one aspect the present invention relates to a liquid herbicidal composition comprising: a non-aqueous solvent system; triflusulfuron; and two or more surfactants; characterized in that at least one of the surfactant classes 1 to 4 (preferably 2 and/or) 4 accounts for 10 wt.% or more of the total amount of surfactant in the liquid composition and at least one of the surfactant classes 5, 6, 8, 9, 10, 11, 12, and 13 (preferably 5 and/or 11) accounts for 10 wt.% or more of the total amount of surfactant in the liquid composition; the surfactant classes 1 to 4 (preferably 2 and/or 4) in total account for 30 to 90 wt.% of the total amount of surfactant in the liquid composition and the surfactant classes 5, 6, 8, 9, 10, 11, 12 and 13 (preferably 5 and 11), in total account for 10 to 70 wt.% of the total amount of surfactant in the liquid composition; with the understanding that 80 wt.% to 100 wt.% of the total amount of surfactant in the liquid composition is selected from the surfactant classes 1, 2, 3, 4, 5, 6, 8, 9, 10, 11, 12 and 13 (preferably 2, 4, 5 and 11). In this embodiment the surfactant classes 1 to 4 (preferably 2 and/or 4) in total preferably account for 40 to 90 wt.% of the total amount of surfactant in the liquid composition, more preferably 50 to 90 wt.% and still more preferably 60 to 90 wt.%, while the surfactant classes 5, 6, 8, 9, 10, 11, 12, and 13 (preferably 5 and/or 11) in total respectively account for 10 to 60 wt.%, 10 to 50 wt.% or 10 to 40 wt.% of the total amount of surfactant in the liquid composition.

For the embodiments described in the paragraph immediately above, if the liquid composition contains 0.5 to 2 wt.% triflusulfuron then it is preferable if the surfactant classes 2 and 4 in total account for 30 to 90 wt.% of the total amount of surfactant in the liquid composition, and the surfactant classes 5 and 11 account for 10 to 70 wt.% of the total amount of surfactant in the liquid composition, and 80 wt.% to 100 wt.% of the total amount of surfactant in the liquid composition is selected from the surfactant classes 2, 4, 5 and 11. The surfactants from classes 2, 4, 5, and 11 show the best stabilisation of triflusulfuron at these low concentrations.

In the present invention, including the specific embodiments discussed above for metsulfuron-methyl, thifensulfuron-methyl, chlorimuron-ethyl, bensulfuron, sulfosulfuron, rimsulfuron, amidosulfuron, pyrazosulfuron, and triflusulfuron, examples of surfactants for each of the surfactant classes mentioned are as follows:
- iso-tridecylalcohol polyglycol ether; 6EO; Me capped (Class 1; e.g. Genapol XM060),
- iso-tridecylalcohol polyglycol ether; 15EO; Me capped (Class 1; e.g. Genapol XM150),
- calcium dodecyl benzene sulfonate (Class 2; e.g. Nansa EVM 70/2E),
- calcium stearate (Class 3),
- magnesium stearate (Class 3),
- C12-C15 alkoxylated ether; 8 EO and 4 PO (Class 5; e.g. Genapol EP2584),
- C12-C15 polyglycol ether; 3EO (Class 5; e.g. Synperonic A3),
- C12-C15 polyglycol ether; 7EO (Class 5; e.g. Synperonic A7),
- C12-C15 polyglycol ether; 11EO (Class 5; e.g. Synperonic A11),
- PEG-8 monostearate (Class 6; e.g. Cithrol 4MS),
- PEG-8 stearate (Class 6; e.g. Myrj S8),
- ethoxylated castor oil; 10EO (Class 7; e.g. Etocas 10),
- ethoxylated castor oil; 40EO (Class 7; e.g. Etocas 40),
- polyoxyethylene (20) sorbitan monooleate (Class 9; e.g. Tween 80),
- sorbitan hexaoleate; 40EO (Class 9; e.g. Atlas G1086),
- EO/PO Block copolymer, 40% EO, (Class 10; e.g. Synperonic PE/L64),
- ethoxylated tristyrylphenol; 16EO (Class 11; e.g. Soprophor BSU),
- ethoxylated tristyrylphenol-phosphate ester; 16EO (Class 13; e.g. Soprophor 3D33),
- isotridecyl phosphate ester; 6EO (Class 14; e.g. Rhodafac RS 610/E),
- octyl phosphate ester; 5EO (Class 14; e.g. Atlox AL-3382),
- decyl phosphate ester; 4EO (Class 14; e.g. Multitrope 810).

### 4.7 Additional active agents

The liquid herbicidal composition may comprise non-sulfonylurea herbicides or safeners such as outlined below.

### 4.7.1 Non-sulfonylurea herbicides

The composition of the present invention may comprise one or more herbicides in addition to the sulfonylurea herbicide(s). These additional non-sulfonylurea herbicides may be liquids, waxy solids or powders and may be dissolved, dispersed, suspended or otherwise contained in the composition. The additional herbicidal compound is not particularly limited and can be any herbicidal compound known in the art. For example, the compound may be selected from the herbicidal compounds listed in the 16th Edition of "The Pesticide Manual" (ISBN-10: 190139686X) and the literature cited therein. Exemplary additional herbicidal compounds include:
2,4-D (e.g. ester or amine), 2,4-DB, 2,3,6-TBA, acetochlor, acifluorfen, acifluorfen-sodium, aclonifen, alachlor, alloxydim, alloxydim-sodium, ametryn, amicarbazone, aminopyralid, amitrole, anilofos, asulam, atrazine, azafenidin, beflubutamid, benazolin,-benazolin-ethyl, benfuresate, bentazone, benzfendizone, benzobicyclon, benzofenap, bifenox, bilanafos, bipyrazone, bispyribac-sodium, bixlozone, bromacil, bromobutide, bromofenoxim, bromoxynil, butachlor, butafenacil, butenachlor, butralin, butroxydim, butylate, cafenstrole, carbetamide, carfentrazone-ethyl, chlomethoxyfen, chloridazon, chlornitrofen, chlorotoluron, cinidon-ethyl, cinmethylin, clacyfos, clefoxydim, clethodim, clodinafop-propargyl, clomazone, clomeprop, clopyralid, cloransulam-ethyl, cumyluron, cyanazine, cyclopyranil, cyclopyrimorate, cycloxydim, cyhalofop-butyl, cypyrafluone, daimuron, dazomet, desmedipham, dicamba, dichlobenil, dichlorprop, dichlorprop-P, diclofop-methyl, diclosulam, difenzoquat, diflufenican, diflufenzopyr, dikegulac-sodium, dimefuron, dimepiperate, dimesulfazet, dimethachlor, dimethametryn, dimethenamid, diquat-dibromide, dithiopyr, diuron, dymron, epyrifenacil, EPTC, esprocarb, ethalfluralin, ethofumesate, ethoxyfen, etobenzanid, fenoxaprop-ethyl, fenoxaprop-P-ethyl, fenquinotrione, fentrazamide, flamprop-M-isopropyl, flamprop-M-methyl, florasulam, florpyrauxifen, fluazifop, fluazifop-butyl, fluazolate, flucarbazone-sodium, fluchloralin, flufenacet, flufenpyr, flumetsulam, flumiclorac-pentyl, flumioxazin, fluometuron, fluorochloridone, fluoroglycofen-ethyl, flupoxam, fluridone, fluroxypyr, fluroxypyr-butoxypropyl, fluroxypyr-meptyl, flurprimidol, flurtamone, fluthiacet-methyl, fomesafen, glufosinate, glufosinate-ammonium, glyphosate, halauxifen, haloxyfop, haloxyfop-ethoxyethyl, haloxyfop-methyl, haloxyfop-P-methyl, herbimycin, hexazinone, imazamethabenz-methyl, imazamox, imazapic, imazapyr, imazaquin, imazethapyr, indanofan, ioxynil, isoproturon, isouron, isoxaben, isoxachlortole, isoxaflutole, ketospiradox, lactofen, lancotrione, lenacil, linuron, MCPA, MCPB, mecoprop, mecoprop-P, mefenacet, mesotrione, metamifop, metamitron, metazachlor, methabenzthiazuron, methyldymron, metobromuron, metolachlor, metosulam, metoxuron, metribuzin, molinate, monolinuron, naproanilide, napropamide, neburon, norflurazon, orbencarb, oryzalin, oxadiargyl, oxadiazon, oxaziclomefone, oxyfluorfen, paraquat, pelargonic acid, pendimethalin, pendralin, penoxsulam, pentoxazone, pethoxamid, phenmedipham, picloram, picolinafen, pinoxaden, piperophos, pretilachlor, profluazol, profoxydim, prometryn, propachlor, propanil, propaquizafop, propisochlor, propoxycarbazone-sodium, propyzamide, prosulfocarb, pyraclonil, pyraflufen-ethyl, pyrazolate, pyrazoxyfen, pyribenzoxim, pyributicarb, pyridafol, pyridate, pyriftalid, pyriminobac-methyl, pyrithiobac-sodium, quinclorac, quinmerac, quinoclamine, quintrione, quizalofop-ethyl, quizalofop-P-ethyl, quizalofop-P-tefuryl, sethoxydim, simazine, simetryn, S-metolachlor, sulcotrione, sulfentrazone, sulfosate, tebuthiuron, tepraloxydim, terbuthylazine, terbutryn, tetflupyrolimet, thenylchlor, thiazopyr, thiobencarb, tiafenacil, tiocarbazil, tolpyralate, tralkoxydim, triafamone, triallate, triaziflam, triclopyr, tridiphane, trifludimoxazin, trifluralin, and tripyrasulfone.

When present, the additional non-sulfonylurea herbicide is preferably comprised in the liquid composition of the invention in an amount of at least 0.1 wt.%. More preferably, the non-sulfonylurea herbicide is comprised in an amount of at least 0.2 wt.%, at least 0.5 wt.%, at least 0.7 wt.%, at least 1 wt.%, at least 2 wt.%, at least 5 wt.%, at least 10 wt.%, at least 15 wt.%, at least 20 wt.% or at least 25 wt.%. The non-sulfonylurea herbicide is preferably comprised in the composition an amount of 95 wt.% or less. A large amount of non-sulfonylurea herbicide is possible when the non-sulfonylurea herbicide is itself a liquid. More preferably, the non-sulfonylurea herbicide is comprised in an amount of 60 wt.% or less, 50 wt.% or less, 40 wt.% or less, 35 wt.% or less, 30 wt.% or less or 25 wt.% or less. Any of the disclosed wt.% lower limits for the amount of non-sulfonylurea herbicide can be combined with any of the disclosed wt.% upper limits to define further suitable wt.% ranges for the purposes of this invention. As an example, further exemplary ranges for the amount of non-sulfonylurea herbicide in the liquid composition include 0.1 to 95 wt.%, 1 to 60 wt.%, 2 to 50 wt.%, 5 to 40 wt.%, 10 to 30 wt.%, 15 to 25 wt.%, 25 to 35 wt.% and 10 to 50 wt.%.

When a salt or derivative (ester, etc.) of the non-sulfonylurea herbicide is employed for the purposes of this invention then the wt.% amounts that are described herein refer to the weight of the salt or derivative. When more than one non-sulfonylurea herbicide is present in the composition (as a salt, derivative or otherwise), then the amounts described herein refer to the sum amount of all of the non-sulfonylurea herbicides present in the composition.

In the present invention one or more of the non-sulfonylurea herbicides may be partially or wholly encapsulated (e.g. microcapsules) such as is described in WO 2008/061721 A2 (GAT Microencapsulation AG). In such case the wt.% amounts that are described herein refer to the weight of the non-sulfonylurea herbicides without the encapsulating material.

The liquid composition of the invention may comprise any of the sulfonylureas described herein with any of the non-sulfonylurea herbicides described herein.

For example, the liquid composition may comprise tribenuron-methyl and any of the other non-sulfonylurea herbicides described herein. Exemplary combinations with tribenuron-methyl include: tribenuron-methyl and 2,4-D (e.g. as ester or amine or choline salt); tribenuron methyl and MCPA (e.g. as ester or amine); tribenuron-methyl and bromoxynil; tribenuron-methyl and glyphosate; tribenuron-methyl and fluroxypyr; tribenuron-methyl and dicamba (e.g. as the sodium salt or diglycolamine salt or ester); tribenuron-methyl and mecoprop-P; tribenuron-methyl and MCPB; tribenuron-methyl, fluroxypyr and clopyralid; tribenuron-methyl and carfentrazone ethyl; tribenuron-methyl and clopyralid (e.g. as MEA salt); tribenuron-methyl and clodinafop; tribenuron-methyl and quinclorac; tribenuron-methyl and florasulam.

The liquid composition may comprise nicosulfuron and any of the other non-sulfonylurea herbicides described herein. Exemplary combinations with nicosulfuron include: nicosulfuron and dicamba (optionally as the sodium salt or ester); nicosulfuron and atrazine; nicosulfuron and flumetsulam; nicosulfuron and clopyralid (optionally as the potassium salt or ester); nicosulfuron and diflupenzopyr (optionally as the sodium salt or ester); nicosulfuron and metolachlor; nicosulfuron and terbuthylazine; nicosulfuron and mesotrione; and nicosulfuron and bentazone.

The liquid composition may comprise metsulfuron-methyl and any of the other non-sulfonylurea herbicides described herein. Exemplary combinations with metsulfuron-methyl include: metsulfuron-methyl and acetochlor; metsulfuron-methyl and carfentrazone ethyl; metsulfuron-methyl and imazapyr; metsulfuron-methyl and aminopyralid; metsulfuron-methyl and fluroxypyr; metsulfuron-methyl and mecoprop-p; metsulfuron-methyl and picloram; metsulfuron-methyl and pyraflufen ethyl; metsulfuron-methyl and propanil; metsulfuron-methyl and glyphosate-ammonium; metsulfuron-methyl and dicamba (optionally as the sodium, dimethylammonium or diglycolamine salt or as an ester); metsulfuron-methyl and 2,4-D (optionally as the dimethylammonium salt, choline salt, or an ester); and metsulfuron-methyl, dicamba (optionally as the sodium, dimethylammonium or diglycolamine salt or as an ester) and 2,4-D (optionally as the dimethylammonium salt, choline salt, or an ester).

Further exemplary combinations of sulfonylureas and non-sulfonylureas for use in the present invention include: bensulfuron-methyl and acetochlor; bensulfuron-methyl and indanofan; bensulfuron-methyl and clomeprop; bensulfuron-methyl and pretilachlor; bensulfuron-methyl and fentrazamide; bensulfuron-methyl and thenylchlor; bensulfuron-methyl and pentoxazone; bensulfuron-methyl and pyriminobac-methyl; bensulfuron-methyl and bromobutide; bensulfuron-methyl, pentoxazone, pyriminobac-methyl, and bromobutide; bensulfuron-methyl and butachlor; bensulfuron-methyl and daimuron; bensulfuron-methyl and mefenacet; bensulfuron-methyl, daimuron and mefenacet; chlorimuron ethyl and sulfentrazone; iodosulfuron-methyl (optionally as the sodium salt) and isoxadifen-ethyl; iodosulfuron-methyl (optionally as the sodium salt) and propoxycarbazone (optionally as the sodium salt); iodosulfuron-methyl (optionally as the sodium salt) and diflufenican; iodosulfuron-methyl (optionally as the sodium salt) and fenoxaprop-P-ethyl; mesosulfuron (and/or as the methyl ester) and diflufenican; mesosulfuron (and/or as the methyl ester) and propoxycarbazone (e.g. sodium salt); pyrazosulfuron-ethyl and pretilachlor; pyrazosulfuron-ethyl and pyriftalid; pyrazosulfuron-ethyl and mefenacet; pyrazosulfuron-ethyl and esprocarb; pyrazosulfuron-ethyl and dimethametryn; pyrazosulfuron-ethyl and oxaziclomefone; pyrazosulfuron-ethyl and benzobicyclon; pyrazosulfuron-ethyl and cyhalofop-butyl; pyrazosulfuron-ethyl and penoxsulam; pyrazosulfuron-ethyl, cyhalofop-butyl, pretilachlor, and dimethametryn; pyrazosulfuron-ethyl, benzobicyclon and penoxsulam; pyrazosulfuron-ethyl, benzobicyclon, dimethametryn and oxaziclomefone; pyrazosulfuron-ethyl, pretilachlor, dimethametryn, and esprocarb; pyrazosulfuron-ethyl, benzobicyclon, butachlor and pyraclonil; pyrazosulfuron-ethyl, benzobicyclon and fentrazamide; foramsulfuron and isoxadifen ethyl; foramsulfuron and cyprosulfamide; foramsulfuron and thiencarbazone-methyl; foramsulfuron, iodosulfuron-methyl sodium salt, and isoxadifen ethyl; foramsulfuron, iodosulfuron-methyl sodium salt, cyprosulfamide and thiencarbazone-methyl; iodosulfuron and thiencarbazone-methyl; metsulfuron methyl, bensulfuron-methyl and acetochlor; thifensulfuron-methyl, chlorimuron-ethyl and flumioxazin; rimsulfuron and mesotrione; rimsulfuron and metolachlor; rimsulfuron and dicamba; rimsulfuron, metolachlor and dicamba; thifensulfuron-methyl and one or more of dicamba, 2,4-D-ester, MCPA-ester, clodinafop, quinclorac, fluroxypyr, acetochlor, lenacil and prometryn; chlorimuron-ethyl and acetochlor; chlorimuron-ethyl and metribuzin; chlorimuron-ethyl and imazethapyr.

### 4.7.2 Safeners

The composition of the present invention may comprise one or more safeners that may be dissolved, dispersed, suspended or otherwise contained in the composition. Suitable safeners are those listed in the *"*The Pesticide Manual" (ISBN-10: 190139686X), as well as those listed in paragraphs [0113] to [0129] of US 2006/0276337 A1, which paragraphs are incorporated herein by reference.

Exemplary safeners include:
(1) compounds of the type of dichlorophenylpyrazoline-3-carboxylic acid such as ethyl 1-(2,4-dichlorophenyl)-5-(ethoxy-carbonyl)-5-methyl-2-pyrazoline-3-carboxylate and related compounds, as described in WO 91/07874;
(2) derivatives of dichlorophenylpyrazolecarboxylic acid, preferably compounds such as ethyl 1-(2,4-dichlorophenyl)-5-methylpyrazole-3-carboxylate, ethyl 1-(2,4-dichlorophenyl)-5-isopropylpyrazole-3-carboxylate, ethyl 1-(2,4-dichlorophenyl)-5-(1,1-dimethylethyl)pyrazole-3-carboxylate, ethyl 1-(2,4-dichlorophenyl)-5-phenylpyrazole-3-carboxylate and related compounds, as described in EP-A-333 131 and EP-A-269 806;
(3) compounds of the type of the triazolecarboxylic acids, preferably compounds such as fenchlorazole, i.e. ethyl 1-(2,4-dichlorophenyl)-5-trichloro-methyl-(1H)-1,2,4-triazole-3-carboxylate, and related compounds (see EP-A-174 562 and EP-A-346 620);
(4) compounds of the type of the 5-benzyl- or 5-phenyl-2-isoxazoline-3-carboxylic acid, or the 5,5-diphenyl-2-isoxazoline-3-carboxylic acid, preferably compounds such as ethyl 5-(2,4-dichlorobenzyl)-2-isoxazoline-3-carboxylate or ethyl 5-phenyl-2-isoxazoline-3-carboxylate and related compounds, as described in WO 91/08202, or ethyl 5,5-diphenyl-2-isoxazolinecarboxylate or n-propyl ester or ethyl 5-(4-fluorophenyl)-5-phenyl-2-isoxazoline-3-carboxylate, as described in the patent application (WO-A-95/07897);
(5) compounds of the type of the 8-quinolineoxyacetic acid, preferably 1-methylhex-1-yl (5-chloro-8-quinolineoxy)acetate, 1,3-dimethylbut-1-yl (5-chloro-8-quinolineoxy)acetate, 4-allyloxybutyl (5-chloro-8-quinolineoxy)acetate, 1-allyloxyprop-2-yl (5-chloro-8-quinolineoxy)acetate, ethyl (5-chloro-8-quinolineoxy)acetate, methyl (5-chloro-8-quinolineoxy)acetate, allyl (5-chloro-8-quinolineoxy)acetate, 2-(2-propylideneiminooxy)-1-ethyl (5-chloro-8-quinolineoxy)acetate, 2-oxoprbp-1-yl (5-chloro-8-quinolineoxy)acetate and related compounds, as described in EP-A-86 750, EP-A-94 349 and EP-A-191 736 or EP-A-0 492 366;
(6) compounds of the type of the (5-chloro-8-quinolineoxy)malonic acid, preferably compounds such as diethyl (5-chloro-8-quinolineoxy)malonate, diallyl (5-chloro-8-quinolineoxy)malonate, methyl ethyl (5-chloro-8-quinoline-oxy)malonate and related compounds, as described in EP-A-0 582 198;
(7) active compounds of the type of the phenoxyacetic or -propionic acid derivatives or the aromatic carboxylic acids, such as, for example, 2,4-dichlorophenoxyacetic acid (esters), 4-chloro-2-methylphenoxy-propionic esters, MCPA or 3,6-dichloro-2-methoxybenzoic acid (esters);
(8) active compounds of the type of the pyrimidines, such as "fenclorim";
(9) active compounds of the type of the dichloroacetamides, which are frequently used as pre-emergence safeners (soil-acting safeners), such as, for example, "dichlormid" (-N,N-diallyl-2,2-dichloroacetamide), "R-29148" (3-dichloroacetyl-2,2,5-trimethyl-1,3-oxazolidone from Stauffer), "benoxacor" (4-dichloroacetyl-3,4-dihydro-3-methyl-2H-1,4-benzoxazine), "PPG-1292" (-N-allyl-N-[(1,3-dioxolan-2-yl)methyl]dichloroacetamide from PPG Industries), "DK-24" (-N-allyl-N-[(allylaminocarbonyl)methyl]dichloroacetamide from Sagro-Chem), "AD-67" or "MON 4660" (3-dichloroacetyl-1-oxa-3-azaspiro[4,5]decane from Nitrokemia or Monsanto), "dicyclonon" or "BAS145138" or "LAB145138" ((3-dichloroacetyl-2,5,5-trimethyl-1,3-diazabicyclo[4.3.0]nonane from BASF) and "furilazol" or "MON 13900" ((RS)-3-dichloroacetyl-5-(2-furyl)-2,2-dimethyloxazolidone);
(10) active compounds of the type of the dichloroacetone derivatives, such as, for example, "MG 191" (CAS-Reg. No. 96420-72-3) (2-dichloromethyl-2-methyl-1,3-dioxolane from Nitrokemia);
(11) active compounds of the type of the oxyimino compounds, such as, for example, "oxabetrinil" ((Z)-1,3-dioxolan-2-ylmethoxyimino-(phenyl)acetonitrile), "fluxofenim" (1-(4-chlorophenyl)-2,2,2-trifluoro-1-ethanone O-(1,3-dioxolan-2-ylmethyl) oxime, and "cyometrinil" or "CGA43089" ((Z)-cyanomethoxyimino-(phenyl)acetonitrile);
(12) active compounds of the type of the thiazolecarboxylic esters, which are known as seed dressings, such as, for example, "flurazole" (benzyl 2-chloro-4-trifluoromethyl-1,3-thiazole-5-carboxylate);
(13) active compounds of the type of the naphthalenedicarboxylic acid derivatives, such as, for example, "naphthalic anhydride" (1,8-naphthalenedicarboxylic anhydride);
(14) active compounds of the type of the chromanacetic acid derivatives, such as, for example, "CL 304415" (CAS-Reg. No. 31541-57-8) (2-(4-carboxychroman4-yl)acetic acid from American Cyanamid);
(15) active compounds which, in addition to a herbicidal action against harmful plants, also have safener action on crop plants such as, for example, "dimepiperate" or "MY-93" (-S-1-methyl-1-phenylethyl piperidine-1-thiocarboxylate), "daimuron" or "SK 23" (1-(1-methyl-1-phenylethyl)-3-p-tolyl-urea), "cumyluron" or "JC-940" (3-(2-chlorophenylmethyl)-1-(1-methyl-1-phenyl-ethyl)urea, see JP-A-60087254), "methoxyphenone" or "NK 049" (3,3'-dimethyl-4-methoxybenzophenone), "CSB" (1-bromo-4-(chloromethylsulfonyl)benzene) (CAS-Reg No. 54091-06-4 from Kumiai).

Preferred herbicide safeners for use in the present invention include benoxacor, BCS (1-bromo-4-[(chloromethyl)sulfonyl]benzene), cloquintocet-mexyl, cyometrinil, cyprosulfamide, dichlormid, dicyclonon, 2-(dichloromethyl)-2-methyl-1,3-dioxolane (MG 191), dietholate, fenchlorazole-ethyl, fenclorim, flurazole, fluxofenim, furilazole, isoxadifen-ethyl, jiecaowan, jiecaoxi, mefenpyr, mefenpyrethyl, metcamifen, methoxyphenone ((4-methoxy-3-methylphenyl)(3-methylphenyl)methanone), mephenate, naphthalic anhydride and oxabetrinil.

The liquid composition of the invention may comprise any of the sulfonylureas described herein with any suitable safener described herein. Exemplary combinations of sulfonylurea and safener include: iodosulfuron-methyl (optionally as the sodium salt) and mefenpyrdiethyl; mesosulfuron (and/or as the methyl ester) and mefenpyr-di-ethyl; mesosulfuron (and/or as the methyl ester) and propoxycarbazone (e.g. sodium salt) and mefenpyr-di-ethyl.

### 4.8 Stabilising agent

Because the surfactant combination as described herein is capable of improving stabilisation of the sulfonylurea herbicide as compared to the surfactant combinations that are currently used in the art, the present invention provides improved freedom to formulators to tailor the composition to particular needs without the need to necessarily include a stabilising agent. That said, if regulatory agencies require that a certain minimum degree of stability is required then the liquid composition of the invention may comprise one or more stabilising agents to further improve the stabilisation to meet that regulatory requirement. Suitable stabilising agents include a salt of a carboxylic or an inorganic acid, such as diammonium hydrogen phosphate, ammonium acetate, sodium acetate, potassium acetate, sodium thiocyanate; urea, thiourea or derivatives thereof. In a preferred embodiment of the invention, the liquid herbicidal composition does not contain urea if it contains nicosulfuron as a sulfonylurea herbicide. In a more preferred embodiment of the invention, the liquid herbicidal composition does not contain urea at all. In some cases urea has been found to provide less stabilisation than many of the stabilising agents described herein. Particularly preferred stabilising agents include an inorganic salt selected from the metal carbonates and metal phosphates as disclosed in WO 2016/102499 A1, or an inorganic or organic Li salt as disclosed in WO 2017/220680 A1. That is, the liquid composition of the present invention may contain any of the salts disclosed in either of these documents, the entire contents of which is incorporated herein by reference.

When present, the total amount of stabilising agent is preferably 0.1 wt.% or more based on the weight of the liquid herbicidal composition, and preferably 10 wt.% or less.

Exemplary stabilising agents from these documents are provided below.

### 4.8.1 Inorganic salt selected from the metal carbonates and metal phosphates

Exemplary inorganic salts selected from the metal carbonates and metal phosphates metal salts include those derived from the alkali metals such as lithium, sodium and potassium, the alkaline earth metals such as magnesium and calcium, as well as those derived from other metals such as aluminium. Preferred salts for the present invention include sodium phosphate and sodium carbonate in their various forms. Exemplary salts include Na₃PO₄, Na₂CO₃, AlPO₄, Mg₃(PO₄)₂ and Na₂HPO₄. Both the anhydrous and hydrated forms of the metal salts can be used but the anhydrous form is most preferred in view of improving chemical stability of the sulfonylurea. When present, the total amount of inorganic salts selected from the metal carbonates and metal phosphates metal salts is preferably 0.1 wt.% or more based on the weight of the liquid herbicidal composition, and preferably 10 wt.% or less.

It is to be understood that the term *"sodium phosphate"* and the term *"potassium phosphate"* includes the various forms of sodium phosphate and potassium phosphate, respectively, as well as all anhydrous and hydrated forms thereof. For example, *"sodium phosphate"* includes monosodium phosphate (anhydrous), monosodium phosphate (monohydrate), monosodium phosphate (dihydrate), disodium phosphate (anhydrous), disodium phosphate (dihydrate), disodium phosphate (heptahydrate), disodium phosphate (octahydrate), disodium phosphate (dodecahydrate), trisodium phosphate (anhydrous, hexagonal), trisodium phosphate (anhydrous, cubic), trisodium phosphate (hemihydrate), trisodium phosphate (hexahydrate), trisodium phosphate (octahydrate), trisodium phosphate (dodecahydrate), monosodium diphosphate (anhydrous), disodium diphosphate (anhydrous), disodium diphosphate (hexahydrate), trisodium diphosphate (anhydrous), trisodium diphosphate (hydrate), trisodium diphosphate nonahydrate, tetrasodium phosphate (anhydrous), tetrasodium diphosphate (decahydrate), sodium triphosphate, and sodium tetraphospate. The term *"potassium phosphate"* includes monopotassium phosphate, dipotassium phosphate and tripotassium phosphate, including the anhydrous forms thereof.

### 4.8.2 Lithium salt

The organic lithium salt is a salt of lithium and a C₁-C₁₂ organic acid. Preferably, the organic lithium salt is a salt of lithium and a C₁-C₁₀ organic acid, more preferably a C₁-C₈ organic acid, and even more preferably a C₁-C₆ organic acid. Salts of lithium and a C₂-C₁₀ organic acid, C₂-C₈ organic acid, C₄-C₁₀ organic acid, and C₄-C₈ organic acid are also contemplated and preferred. The organic acid may be saturated or unsaturated; it may be aliphatic, aromatic, or heterocyclic; and/or it may be straight-chained, branched or cyclic. As used herein, the use of terms such as "C₁-C₁₂ organic acid" should be taken as a disclosure of an organic acid having each of the possible number of carbon atoms in the stated range: in this case, one, two, three, four, five, six, seven, eight, nine, ten, eleven or twelve carbon atoms. For the avoidance of any doubt, the carboxylic acid groups in the organic acid, as well as the carbon atoms in any substituent on the organic acid, are also counted when assessing the total number of carbon atoms in the organic acid. Lithium salts of small-chain fatty acids (C₁-C₅) or medium-chain fatty acids (C₆-C₁₂) are particularly preferred for the stability that they provide to the sulfonylurea but with reduced thickening effect on the liquid formulation. In this respect, small-chain fatty acids are most preferred. Preferably, the small chain fatty acid is a C₁-C₄ organic acid, more preferably a C₁-C₃ organic acid, and most preferably a C₁- or C₂-organic acid. The organic acid may have one, two, three or more carboxyl groups. Derivatives of the organic acid are acids which are mono-, di-, tri- or polysubstituted along the carbon chain or the cyclic structure. Examples of substituents of the organic acids of the invention include C₁-C₆-alkyl, C₂-C₆-alkenyl, aryl, aralkyl and aralkenyl, hydroxymethyl, C₂-C₆-hydroxyalkyl, C₂-C₆-hydroxyalkenyl, aminomethyl, C₂-C₆-aminoalkyl, cyano, formyl, oxo, thioxo, hydroxyl, mercapto, amino, carboxyl or imino groups. Preferred substituents are C₁-C₆-alkyl (e.g. methyl, ethyl, propyl), hydroxymethyl, hydroxyl, amino and carboxyl groups. Examples of organic acids that can be used for the lithium organic acid salt include, but are not limited to, formic acid, acetic acid, propionic acid, butyric acid, lactic acid, citric acid, isobutyric acid, valeric acid, isovaleric acid, lauric acid, capric acid, caprylic acid, caproic acid, pivalic acid, oxalic acid, malonic acid, salicylic acid, tartaric acid, succinic acid, glutaric acid, glyceric acid, glyoxylic acid, adipic acid, pimelic acid, suberic acid, azelaic acid, sebacic acid, propiolic acid, crotonic acid, isocrotonic acid, elaidic acid, maleic acid, fumaric acid, muconic acid, citraconic acid, mesaconic acid, camphoric acid, phthalic acid (o-, m-, or p-), naphthoic acid, benzoic acid, toluic acid, hydratropic acid, atropic acid, cinnamic acid, isonicotinic acid, nicotinic acid, bicarbamic acid, 4,4'-dicyano-6,6'-binicotinic acid, 8-carbamoyl-octanoic acid, 1,2,4-pentanetricarboxylic acid, 2-pyrrolecarboxylic acid, malonaldehydic acid, 4-hydroxyphthalamic acid, 1-pyrazolecarboxylic acid, gallic acid or propanetricarboxylic acid. It is particularly preferred to use the lithium salt of formic acid, acetic acid, propionic acid, fumaric acid, salicylic acid, citric acid, lactic acid, oxalic acid and/or tartaric acid, with formic acid, acetic acid, citric acid and oxalic acid being most preferred.

The inorganic lithium salt is a salt of lithium and an inorganic acid. Exemplary inorganic acids include, but are not limited to, HAlO₂, HAl(OH)₄, H₃AsO₄, HAsO₂, H₃AsO₃, H₃BO₃, (HBO₂)ₙ, H₂B₄O₇, HBO₃, HBrO₃, HBrO₂, HBrO, HBrO₄, H₂CO₃, H₄CO₄, H₂C₂O₆, H₂CO₄ (or H₂CO₃H₂O₂), HClO₃, HClO₄, HClO₂, HClO, HONC, HOCN, HNCO, HIO₃, HIO (or IOH, HIO₄), H₅IO₆, H₄I₂O₉, HNO₃, HNO₂, H₃PO₄, H₅PO₅, HPO₃, H₃PO₃, H₄P₂O₅, HPO₂, H₃PO₂, H₄P₂O₆, H₄P₂O₇, H₂SO₄, H₂SO₃, H₂S₂O₃, H₂S₂O₇, H₂SO₂, H₂SₓO₆ (x=2-6), H₆SO₆, H₂S₂O₄, H₂SO₅, H₂S₂O₈, HSO₃Cl, HSO₃F, H₂SiO₃ (or SiO₂.H₂O), H₄SiO₄, H₂Si₂O₅ (or SiO₂.H₂O), H₄Si₃O₈, H₆Si₂O₇ (or 2SiO₂.3H₂O), H[CHB₁₁Cl₁₁], H₂S, H₂CS₄, H₂CS₃, HCN, HSeCN, HSCN, HBF₄, H₂SiF₆, HPF₆, HF, HCl, HBr, and HI. Preferably, the inorganic lithium salt is a carbonate, a phosphate, a sulphate, or a halide (preferably, F or CI).

Lithium salts that are envisioned for use in the present invention include, by way of example, the following compounds: lithium acetate, lithium acetate dihydrate, lithium acetoacetate, lithium acetylacetonate, lithium iodoacetate, lithium 2-hydroxybutanoate, lithium molybdate, lithium titanate, lithium manganese oxide, lithium manganese dioxide, lithium iron phosphate, lithium zirconate, lithium iron oxide, lithium D-gluconate, lithium pentaborate, lithium bromide, lithium iodide, lithium chloride, lithium calcium chloride, lithium hydrogen carbonate, lithium carbonate, lithium citrate, lithium hydroxide, lithium manganate, lithium methionate, lithium oxalate, lithium monoxide, lithium oxide, lithium mono-orthophosphate, lithium orthophosphite, lithium silicate, lithium disilicate, lithium metasilicate, lithium sodium carbonate, lithium salt (E,E)-2,4-hexadienoic acid, dilithium fluorophosphate, dilithium fluorophosphite, lithium metaphosphate, trilithium phosphate, trilithium phosphite, lithium propanoate, lithium butanoate, lithium pentanoate, lithium hexanoate, lithium heptanoate, lithium octanoate, lithium nonanoate, lithium decanoate, lithium formate, lithium phosphate (dibasic, monobasic, tribasic), lithium salicylate, lithium-sodium phosphate, lithium sulfite, lithium sulfate, dilithium sulfite, lithium thiocyanate, lithium fluorosilicate, oxalic acid dilithium salt, lithium betahydropyruvic acid, lithium benzoate, cyclohexane acid lithium salt, lithium fluoride, lithium aluminate, lithium tetrafluoroborate, lithium thioacetate, L-glutamic acid monolithium salt, fumaric acid lithium salt, lithium trimethylsilanolate, lithium hydrogensulfate, lithium pyrophosphate, lithium dihydrogenphosphate, monolithium L-aspartic acid, lithium bromate, lithium periodate, monlithium salt D-saccharic acid, D-asparatic lithium salt, (R)-alpha-hyroxymethylaspartic acid lithium salt, lithium salt ethyl malonate, lithium salt lactic acid, dilithium thiosulfate, lithium dichloroacetate, lithium dimethylacetate, lithium diethylacetate, lithium dipropyl-acetate, lithium metaborate, lithium laurate, lithium caprate, lithium caprylate, lithium caproate, lithium tetraborate, lithium difluoride, lithium bismuthate, lithium borate, lithium chlorite, lithium hexametaphosphate, lithium hydrogenphosphite, lithium hydrogenselenite, lithium hydrogensulfite, lithium hydrosulfite, lithium hypochlorite, lithium polyphosphate, lithium polyphosphite, lithium propionate, lithium pyrophosphate, lithium selenate, lithium thiosulfate, lithium thiosulfide, and lithium thiosulfite. It is to be understood that the above list includes analogues, homologues, isomers, enantiomers, hydrates and derivatives thereof.

Both the anhydrous and hydrated forms of the lithium salts can be used for the purpose of this invention but the anhydrous form is most preferred in view of improving chemical stability of the sulfonylurea.

When present, the total amount of inorganic and C1-C12 organic Li salt is preferably 0.1 wt.% or more based on the weight of the liquid herbicidal composition, and preferably 10 wt.% or less.

### 4.9 Co-formulants

The composition of the invention may comprise one or more additional co-formulants such as thickeners and thixotropic agents, wetting agents, anti-drift agents, adhesives, penetrants, preservatives, antifreeze agents, antioxidants, solubilizers, fillers, carriers, colorants, antifoams, fertilizers, evaporation inhibitors and agents which modify pH and viscosity. In one embodiment of the invention the liquid composition comprises at least one co-formulant that is an adjuvant, such as one of those listed in the Compendium of Herbicide Adjuvants, 12th Edition, Southern Illinois University, 2014, or any earlier edition thereof. Examples of commonly used adjuvants include, but are not limited to, paraffin oil, horticultural spray oils (e.g., summer oil), methylated rape seed oil, methylated soybean oil, highly refined vegetable oil and the like, polyol fatty acid esters, polyethoxylated esters, ethoxylated alcohols, alkyl polysaccharides and blends, amine ethoxylates, sorbitan fatty acid ester ethoxylates, polyethylene glycol esters, alkylpolyglucosides and their derivatives (e.g. esters), organosilicone based surfactants, ethylene vinyl acetate terpolymers, ethoxylated alkyl aryl phosphate esters and the like.

### 4.10 Method of preparation

The composition of the invention can be prepared by known processes, for example by mixing the components and milling the suspended solids or dissolving the solids (e.g. as in WO 2016/102499 A1 or WO 2017/220680 A1). Thus, it is possible, for example, to prepare a premix by dissolving soluble auxiliaries and additives in the non-aqueous solvent system (e.g. an organic solvent). Any soluble agrochemically active compounds used can also be dissolved in the premix. Once the dissolution process has ended, solid sulfonylurea, or any other insoluble agrochemically active compounds can be suspended in the mixture. The coarse suspension is, if appropriate after pregrinding, subjected to fine grinding. In another embodiment, solid sulfonylurea and, if appropriate, any insoluble components used are suspended in the organic solvent and subjected to grinding. Any soluble active compounds used and any auxiliaries and additives which do not require grinding or are not required for the grinding process can be added after grinding.

To prepare the mixtures, it is possible to use customary mixing apparatus which, if required, are thermostatted. For pre-grinding, it is possible to use, for example, high-pressure homogenizers or mills operating by the rotor-stator principle, such as Ultraturrax homogenizers, for example those from IKA, or toothed colloid mills, for example from Puck or Fryma. For fine grinding, it is possible to use, for example, bead mills which operate batchwise, for example from Drais, or bead mills which operate continuously, for example from Bachofen or Eiger.

### 5. Examples

The following trade-named ingredients are used in the examples:
- Arquad 2.10-80: dodecyl dimethylammonium chloride
- Ethomeen C/15: C12,14 amine 5 EO ethoxylate
- Soprophor FL: TSP 16EO phosphate ester, TEA salt
- Nansa EVM 40/2NDL: calcium dodecyl benzene sulfonate
- Synperonic PE/L64: EO/PO Block copolymer, 40% EO
- Atlas G1086: sorbitan hexaoleate, 40EO
- Span 80: polyoxyethylene (80) sorbitan monooleate
- Etocas 40: ethoxylated castor oil, 40EO
- Genapol XM060: iso-tridecylalcohol polyglycol ether; 6EO; Me capped
- Soprophor 4D384: tristyrylphenol ethoxylate sulphate esters
- Rhodacal 70/B: calcium dodecyl benzene sulfonate
- Genapol EP 2584: C12-C15 alkoxylated ether; 8 EO and 4 PO
- Atlox 4912: block copolymers (A-B-A) of polyethylene glycol and polyhydroxystearic acid, Mw approximately 5000
- Soprophor BSU: ethoxylated tristyrylphenol, 16EO
- Etocas 10: ethoxylated castor oil, 10EO
- Agrimer AL22: 2-pyrrolidone, 1-ethenyl hexadecyl homopolymer

### Example 1 - Effect on sulfonylurea stability by adding a surfactant

A number of liquid compositions comprising different sulfonylurea herbicides with or without a surfactant were prepared in the same manner as the oil dispersions of WO 2016/102499 A1 (but without the added inorganic salt). These were tested to determine the chemical stability of the sulfonylurea after storage at 54°C for two weeks. The results are summarised below.

**Table 1-1**

| | Comparative Examples | | |
|---|---|---|---|
| | OD1 | OD2 | OD3 |
| Component (wt.%) | | | |
| | | | |
| Metsulfuron-methyl | 15 | | |
| Halo sulfuron-methyl | | 10 | |
| Chlorimuron-ethyl | | | 10 |
| | | | |
| Isobornyl acetate | to 100 | to 100 | to 100 |
| | | | |
| Stability (%) | 97 | 96 | 98 |

**Table 1-2**

| | Comparative Examples | | | | | | | | |
|---|---|---|---|---|---|---|---|---|---|
| | OD4 | OD5 | OD6 | OD7 | OD8 | OD9 | OD10 | OD11 | OD12 |
| Component (wt.%) | | | | | | | | | |
| | | | | | | | | | |
| Metsulfuron-methyl | 15 | | | 15 | | | 15 | | |
| Halo sulfuron-methyl | | 10 | | | 10 | | | 10 | |
| Chlorimuron-ethyl | | | 10 | | | 10 | | | 10 |
| | | | | | | | | | |
| Arquad 2.10-80 | 10 | 10 | 10 | | | | | | |
| Ethomeen C/15 | | | | 10 | 10 | 10 | | | |
| Soprophor FL | | | | | | | 10 | 10 | 10 |
| | | | | | | | | | |
| Isobornyl acetate | to 100 | to 100 | to 100 | to 100 | to 100 | to 100 | to 100 | to 100 | to 100 |
| | | | | | | | | | |
| Stability (%) | 29 | 0 | 0 | 73 | 1 | 17 | 79 | 34 | 54 |

The sulfonylureas were found to be generally stable in isobornyl acetate (OD1-OD3) in the absence of any surfactant. However, upon addition of a surfactant the stability of the sulfonylurea decreases considerably.

### Example 2 - Effect of sulfonylurea concentration on its stability in the presence of a surfactant

Oil dispersions were prepared in the same manner as the oil dispersions of WO 2016/102499 A1 (but without the added inorganic salt). These were tested to determine the chemical stability of the sulfonylurea after storage at 54°C for two weeks. The results are summarised below.

**Table 2**

| | Comparative Examples | | |
|---|---|---|---|
| | OD13 | OD14 | OD15 |
| Component (wt.%) | | | |
| | | | |
| Metsulfuron-methyl | 15 | 5 | 1 |
| | | | |
| Soprophor FL | 10 | 10 | 10 |
| | | | |
| Isobornyl acetate | to 100 | to 100 | to 100 |
| | | | |
| Stability (%) | 79 | 42 | 0 |

Degradation of the sulfonylurea in percentage terms was found to be more severe as the concentration of the sulfonylurea decreases.

### Example 3 - Effect of surfactant blend on sulfonylurea stability (1)

Oil dispersions were prepared in the same manner as the oil dispersions of WO 2016/102499 A1 (but without the added inorganic salt). These were tested to determine the chemical stability of the sulfonylurea after storage at 54°C for two weeks. The results are summarised below.

**Table 3**

| | Comp. Example | | | Examples | | | | |
|---|---|---|---|---|---|---|---|---|
| | OD16 | OD17 | OD18 | OD19 | OD20 | OD21 | OD22 | OD23 |
| Component (wt.%) | | | | | | | | |
| | | | | | | | | |
| Pyrazosulfuron-ethyl | 1 | 1 | 1 | 1 | 1 | 1 | 1 | 1 |
| | | | | | | | | |
| Soprophor FL | | 10 | 4 | 1 | | | | |
| Nansa EVM 40/2NDL | | | 4.2 | 6.3 | 7 | 7 | 7 | 7 |
| Synperonic PE/L64 | | | 1.8 | 2.7 | 3 | | | |
| Atlas G1086 | | | | | | 3 | | |
| Span 80 | | | | | | | 3 | |
| Etocas 40 | | | | | | | | 3 |
| | | | | | | | | |
| Isobornyl acetate | to 100 | to 100 | to 100 | to 100 | to 100 | to 100 | to 100 | to 100 |
| | | | | | | | | |
| Stability (%) | 94 | 0 | 49 | 71 | 76 | 75 | 80 | 73 |

As was observed in Example 1, the sulfonylurea was found to be generally stable in the absence of any surfactant (OD16), but stability decreased on adding surfactant. The choice of surfactant matters. Adding a surfactant that is not according to class 1 to 14 leads to complete degradation of the sulfonylurea (OD17). While stability can be improved by adding surfactants according to Class 1 to 14 of the invention (OD18), stability is improved considerably if surfactants according to Class 1 to 14 make up 80 wt.% or more of the total surfactant content (OD19). Similar stability is found for various combinations of surfactant according to Class 1 to 14 (OD20-OD23).

### Example 4 - Effect of surfactant blend on sulfonylurea stability (2)

Oil dispersions were prepared in the same manner as the oil dispersions of WO 2016/102499 A1 (but without the added inorganic salt). These were tested to determine the chemical stability of the sulfonylurea after storage at 54°C for two weeks. The results are summarised below.

**Table 4**

| | Comp. Example | | | Examples | | | |
|---|---|---|---|---|---|---|---|
| | OD24 | OD25 | OD26 | OD27 | OD28 | OD29 | OD30 |
| Component (wt.%) | | | | | | | |
| | | | | | | | |
| Pyrazosulfuron-ethyl | 1 | 1 | 1 | 1 | 1 | 1 | 1 |
| | | | | | | | |
| Soprophor FL | | 10 | 4 | 1 | | | |
| Genapol XM060 | | | 4.2 | 6.3 | 7 | 7 | 3 |
| Synperonic PE/L64 | | | 1.8 | 2.7 | 3 | | |
| Etocas 40 | | | | | | 3 | |
| Soprophor 4D384 | | | | | | | 7 |
| | | | | | | | |
| Isobornyl acetate | to 100 | to 100 | to 100 | to 100 | to 100 | to 100 | to 100 |
| | | | | | | | |
| Stability (%) | 94 | 0 | 12 | 61 | 81 | 77 | 66 |

As was observed in Example 3, stability can be improved by adding surfactants according to Class 1 to 14 of the invention (OD26), but stability is improved considerably if surfactants according to Class 1 to 14 make up 80 wt.% or more of the total surfactant content (OD27). Similar stability is found for various combinations of surfactant according to Class 1 to 14 (OD28-OD30).

### Example 5 - Effect of surfactant blend on sulfonylurea stability (3)

Oil dispersions were prepared in the same manner as the oil dispersions of WO 2016/102499 A1 (but without the added inorganic salt). These were tested to determine the chemical stability of the sulfonylurea after storage at 54°C for two weeks. The results are summarised below.

**Table 5**

| | Comp. Example | | | Examples | | |
|---|---|---|---|---|---|---|
| | OD31 | OD32 | OD33 | OD34 | OD35 | OD36 |
| Component (wt.%) | | | | | | |
| | | | | | | |
| Pyrazosulfuron-ethyl | 1 | | | | | |
| | | | | | | |
| Soprophor FL | | 10 | 4 | 1 | | |
| Nansa EVM 40/2NDL | | | 2.1 | 3.15 | 3.5 | 3.5 |
| Genapol XM060 | | | 2.1 | 3.15 | 3.5 | 3.5 |
| Synperonic PE/L64 | | | 1.8 | 2.7 | 3 | |
| Etocas 40 | | | | | | 3 |
| | | | | | | |
| Isobornyl acetate | to 100 | to 100 | to 100 | to 100 | to 100 | to 100 |
| | | | | | | |
| Stability (%) | 94 | 0 | 48 | 69 | 76 | 72 |

As was observed in Examples 4 and 5, stability can be improved by adding three surfactants according to Class 1 to 14 of the invention (OD33), but stability is improved considerably if surfactants according to Class 1 to 14 make up 80 wt.% or more of the total surfactant content (OD34). Similar stability is found for various combinations of three surfactant according to Class 1 to 14 (OD35 and OD36).

### Example 6 - Stability can be improved further by addition of salt

Oil dispersions were prepared in the same manner as the oil dispersions of WO 2016/102499 A1 (but without the added inorganic salt). These were tested to determine the chemical stability of the sulfonylurea after storage at 54°C for two weeks. The results are summarised below.

**Table 6**

| | Examples | | | | | |
|---|---|---|---|---|---|---|
| | OD37 | OD38 | OD39 | OD40 | OD41 | OD42 |
| Component (wt.%) | | | | | | |
| | | | | | | |
| Pyrazosulfuron-ethyl | 1 | 1 | | | | |
| Iodosulfuron-methyl sodium | | | 1 | 1 | 1 | 1 |
| | | | | | | |
| Genapol XM060 | 7 | 7 | 2.8 | 2.8 | | |
| Synperonic PE/L64 | 3 | 3 | | | | |
| Rhodacal 70/B | | | 5.6 | 5.6 | 5.6 | 5.6 |
| Genapol EP 2584 | | | 2.8 | 2.8 | | |
| Atlox 4912 | | | 0.8 | 0.8 | | |
| Soprophor BSU | | | | | 2.8 | 2.8 |
| Etocas 10 | | | | | 2.8 | 2.8 |
| Agrimer AL22 | | | | | 0.8 | 0.8 |
| | | | | | | |
| Trisodium phosphate | | 1 | | | | |
| Lithium acetate | | | | 1 | | 1 |
| | | | | | | |
| Isobornyl acetate | to 100 | to 100 | to 100 | to 100 | to 100 | to 100 |
| | | | | | | |
| Stability (%) | 81 | no degradation | 61.6 | 95.3 | 60.5 | 95.6 |

Chemical stabilisation of the sulfonylurea is further improved by adding an inorganic salt selected from the metal carbonates and metal phosphates (OD38) or by adding an inorganic or C1-C12 organic lithium salt (OD40 and OD42).

## Claims

1. A liquid herbicidal composition comprising:
a non-aqueous solvent system;
one or more sulfonylurea herbicides, provided that at least one sulfonylurea herbicide is present in the liquid composition in an amount of 10 wt.% or less; and
two or more surfactants;
**characterized in that**:
80 wt.% to 100 wt.% of the total amount of surfactant in the liquid composition is made up of surfactants selected from the surfactant classes 1-14 listed below; and
at least two different surfactant classes 1-14 each account for 10 wt.% or more of the total amount of surfactant in the liquid composition:
| | |
|---|---|
| Class 1 | Alkyl end-capped fatty alcohol alkoxylates; |
| Class 2 | Alkylbenzene sulfonates having a counterion that does not contain nitrogen; |
| Class 3 | Metallic stearates; |
| Class 4 | Fatty acid-polyalkylene glycol ABA-block copolymers. |
| Class 5 | Fatty alcohol alkoxylates; |
| Class 6 | Fatty acid alkoxylates; |
| Class 7 | Ethoxylated castor oil; |
| Class 8 | Sorbitan esters; |
| Class 9 | Ethoxylated sorbitan esters; |
| Class 10 | EO/PO/EO Block copolymer; |
| Class 11 | Tristyrylphenol ethoxylates; |
| Class 12 | Tristyrylphenol ethoxylates sulphate esters having a counterion that does not contain nitrogen; |
| Class 13 | Tristyrylphenol ethoxylates phosphate esters having a counterion that does not contain nitrogen; and |
| Class 14 | Ethoxylated alkyl phosphate esters having a counterion that does not contain nitrogen. |

2. The liquid herbicidal composition according to claim 1, wherein at least one sulfonylurea herbicide is present in the liquid composition in an amount of 0.1 to 5 wt.% based on the total weight of the liquid composition.

3. The liquid herbicidal composition according to claim 1, wherein at least one sulfonylurea herbicide is present in the liquid composition in an amount of 0.1 to 1 wt.% based on the total weight of the liquid composition.

4. The liquid composition according to any one of claims 1 to 3, further comprising an inorganic salt selected from the metal carbonates and metal phosphates and/or an inorganic or C1-C12 organic lithium salt.

5. The liquid herbicidal composition according to any one of claims 1 to 4, wherein at least one of the surfactant classes 1-4 accounts for at least 10 wt.% of the total amount of surfactant in the liquid composition and at least one of surfactant classes 5-14 accounts for at least 10 wt.% of the total amount of surfactant in the liquid.

6. The liquid herbicidal composition according to any one of claims 1 to 5, wherein the surfactant classes 1-4 in total account for 30 to 90 wt.% of the total amount of surfactant in the liquid composition and the surfactant classes 5-14 in total account for 10 to 70 wt.% of the total amount of surfactant in the liquid composition.

7. The liquid herbicidal composition according to any one of claims 1 to 6, wherein the total amount of surfactant in the liquid composition is from 5 to 30 wt.% based on the total weight of the liquid composition.

8. The liquid herbicidal composition according to any one of claims 1 to 7, wherein the total amount of sulfonylurea herbicide in the liquid composition is from 0.1 to 2 wt.% based on the total weight of the liquid composition.

9. The liquid herbicidal composition according to any one of claims 1 to 8, wherein the sulfonylurea that is present in an amount of 10 wt.% or less is selected from iodosulfuron, halosulfuron, metsulfuron, pyrazosulfuron, amidosulfuron, azimsulfuron, bensulfuron, chlorimuron, chlorsulfuron, cinosulfuron, cyclosulfamuron, ethametsulfuron, ethoxysulfuron, flazasulfuron, flucetosulfuron, flupyrsulfuron, foramsulfuron, imazosulfuron, iofensulfuron, mesosulfuron, metazosulfuron, nicosulfuron, orthosulfamuron, oxasulfuron, primisulfuron, propyrisulfuron, prosulfuron, rimsulfuron, sulfometuron, sulfosulfuron, thifensulfuron, triasulfuron, tribenuron, trifloxysulfuron, triflusulfuron and tritosulfuron, or salts or esters thereof.

10. The herbicidal composition according to any one of claims 1 to 9, which is formulated as an oil dispersion (OD), a dispersible concentrate (DC), an emulsifiable concentrate (EC), or a soluble concentrate (SL).

11. The herbicidal composition according to any one of claims 1 to 10, wherein:
(i) the alkyl end-capped fatty alcohol alkoxylates of Class 1 are represented by Formula (I):
R¹-(EO)ₓ(PO)_{y}(BO)_{z}-O-R² Formula (I)
wherein
R¹ is a linear or branched C8 to C24 alkyl group, preferably a linear or branched C12 to C15 alkyl group;
EO, PO and BO represent an ethoxy group (OC₂H₄), a propoxy group (OC₃H₆) and a butoxy group (OC₄H₈), respectively, and the EO, PO and BO groups are arranged randomly or in a block formation;
the indices x, y and z are each independently an integer from 0 to 50, provided that the sum of x+y+z is from 1 to 150, preferably 3 to 50;
R² is a C1-C6 alkyl group, preferably methyl;
(ii) the alkylbenzene sulfonates of Class 2 are represented by Formula (II): 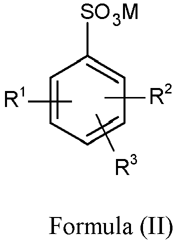 wherein
R¹ is hydrogen or an alkyl group containing from 1 to 3 carbon atoms;
R² is hydrogen or an alkyl group containing from 1 to 3 carbon atoms;
R³ is an alkyl group having from 8 to 40 carbon atoms, and is preferably at the paraposition relative to the SO₃M group; and
M is a monovalent or divalent cation, provided that M does not contain a nitrogen atom;
(iii) the metallic stearates of Class 3 are selected from sodium stearate, calcium stearate, zinc stearate, magnesium stearate or aluminium stearate;
(iv) the fatty acid-polyalkylene glycol ABA-block copolymersof Class 4 have the general formula A-COO-B-OOC-A, in which A and B are as follows:
A is represented by Formula (IV-A): 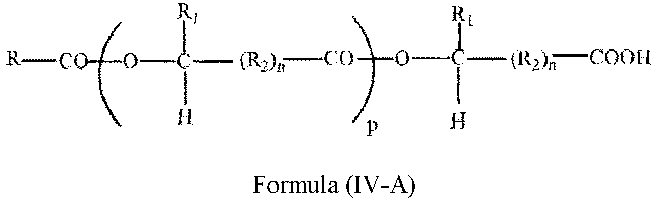 wherein
R is hydrogen or a monovalent hydrocarbon or substituted hydrocarbon group;
R₁ is hydrogen or a monovalent C1 to C24 hydrocarbon group, preferably a C1-C24 alkyl group;
R₂ is a divalent C1 to C24 hydrocarbon group, preferably a C1-C24 alkyl group;
n is zero or 1;
p is an integer from zero to 200; and
B has a molecular weight of at least 500 and is the divalent residue of a water-soluble polyalkylene glycol having the Formula (IV-B): 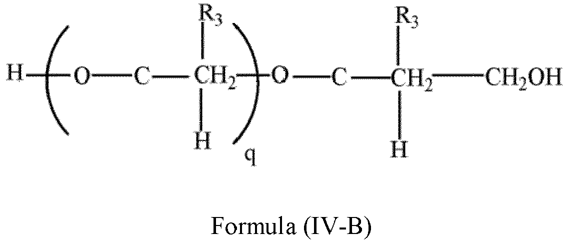 wherein
R₃ is hydrogen or a C1 to C3 alkyl group;
q is an integer from 10 to 500;
(v) the fatty alcohol alkoxylates of Class 5 are represented by Formula (V):
R¹-(EO)ₓ(PO)_{y}(BO)_{z}-OH Formula (V)
wherein
R¹ is a linear or branched C8 to C24 alkyl group, preferably a linear or branched C12 to C15 alkyl group;
EO, PO and BO represent an ethoxy group (OC₂H₄), a propoxy group (OC₃H₆) and a butoxy group (OC₄H₈), respectively, and the EO, PO and BO groups are arranged randomly or in a block formation; and
the indices x, y and z are each independently an integer from 0 to 50, provided that the sum of x+y+z is from 1 to 150, preferably 3 to 50;
(vi) the fatty acid alkoxylates of Class 6 are represented by Formula (VI):
R¹-COO-(EO)ₓ(PO)_{y}(BO)_{z}-R² Formula (VI)
wherein
R¹ is a linear or branched C7 to C23 alkyl group, preferably a linear or branched C11 to C17 alkyl group;
EO, PO and BO represent an ethoxy group (OC₂H₄), a propoxy group (OC₃H₆) and a butoxy group (OC₄H₈), respectively, and the EO, PO and BO groups are arranged randomly or in a block formation;
the indices x, y and z are each independently an integer from 0 to 50, provided that the sum of x+y+z is from 1 to 150, preferably 3 to 50;
R² is hydrogen (i.e. a mono fatty acid alkoxylate) or C(=O)R³ (i.e. a di fatty acid alkoxylate) where R³ is a linear or branched C7 to C23 alkyl group, preferably a linear or branched C11 to C17 alkyl group;
(vii) the ethoxylated castor oil surfactants of Class 7 are represented by Formula (VII) or a hydrogenated form thereof: 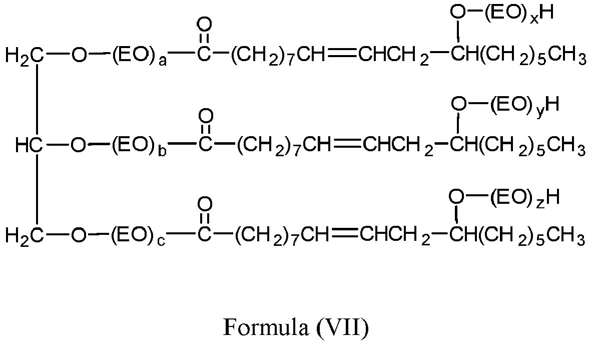 wherein,
EO is an ethylene oxide unit,
each of a, b, and c independently represents an integer of 0 to 300; and
each of x, y and z independently represents an integer of 1 to 300;
(viii) the sorbitan esters of Class 8 are represented by Formula (VIII): 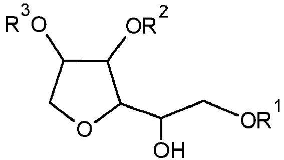 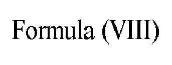 wherein
R¹ is a C10 to C18 saturated or unsaturated fatty acid residue (that is, -(C=O)-C9 to - (C=O)-C17), and
R² and R³ are independently hydrogen or a C10 to C18 saturated or unsaturated fatty acid residue;
(ix) the ethoxylated sorbitan esters of Class 9 are represented by Formula (IX): 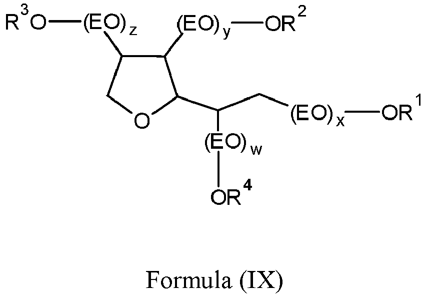 wherein
EO is an ethylene oxide unit,
R¹ is a C10 to C18 saturated or unsaturated fatty acid residue (that is, -(C=O)-C9 to - (C=O)-C17),
R² to R⁴ are independently hydrogen or a C10 to C18 saturated or unsaturated fatty acid residue, and
the extent of ethoxylation is 10 to 40 (that is, 10 ≤ w+x+y+z ≤ 40), preferably 18 to 22, and more preferably is 20;
(x) the EO/PO/EO block copolymers of Class 10 are represented by Formula (X):
R¹-(EO)ₓ(PO)_{y}(EO)_{z}-R² (X)
wherein
EO is an ethylene oxide unit and PO is a propylene oxide unit, and EO and PO are arranged in a block formation,
x and z independently range from 2 to 150 and y ranges from 1 to 100,
R¹ is OH, or a linear or branched C1-C20 alkyl or alkenyl group, and
R² is H, or a linear or branched C1-C20 alkyl or alkenyl group;
(xi) the tristyrylphenol ethoxylates of Class 11 are represented by Formula (XI): 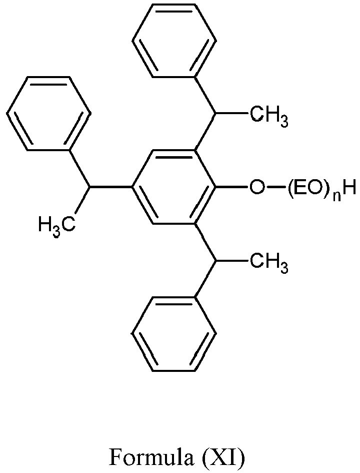 wherein
n is a number from 4 to 150, preferably 10 to 100, more preferably 15 to 60;
(xii) the tristyrylphenol ethoxylate sulphate esters of Class 12 are represented by Formula (XII): 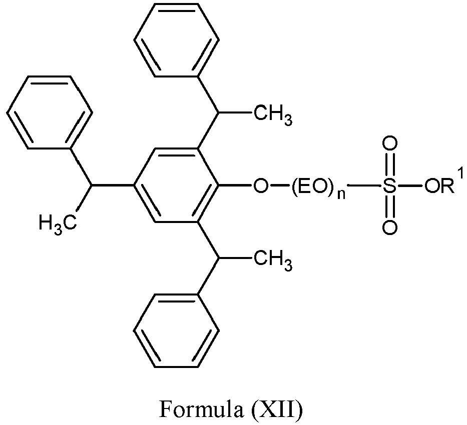 wherein
n is a number from 4 to 150, preferably 10 to 100, more preferably 15 to 60; and
R¹ is a cation, provided that R¹ does not contain a nitrogen atom;
(xiii) the tristyrylphenol ethoxylate phosphate esters of Class 13 are represented by Formula (XIII): 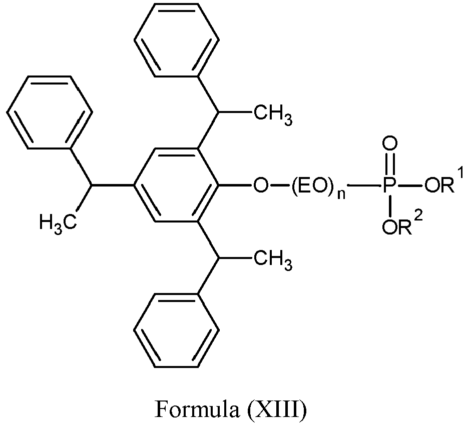 wherein
n is a number from 4 to 150, preferably 10 to 100, more preferably 15 to 60 and
R¹ and R² are independently a cation, provided that neither R¹ nor R² contains a nitrogen atom;
(xiv) the alkyl ethoxylate phosphate esters of Class 14 are represented by Formula (XIV) : 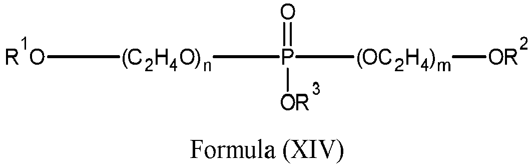 wherein
R¹ is a linear or branched C6 to C24 alkyl or alkenyl group, preferably a linear or branched C8 to C12 alkyl group;
R² is a linear or branched C6 to C24 alkyl or alkenyl group, preferably a linear or branched C8 to C12 alkyl group, or alternatively is a cation, provided that the cation does not contain a nitrogen atom;
R³ is a cation, provided that the cation does not contain a nitrogen atom;
n is 3 to 20; and
m is 0 to 20.

12. The liquid herbicidal composition according to any one of claims 1 to 11, wherein:
the sulfonylurea herbicide that is present in an amount of 10 wt.% or less is metsulfuron-methyl;
at least one of the surfactant classes 1-4 accounts for 10 wt.% or more of the total amount of surfactant in the liquid composition and at least one of the surfactant classes 5, 6, 8, 9, 10, 11, 12 and 13 accounts for 10 wt.% or more of the total amount of surfactant in the liquid composition;
the surfactant classes 1-4 in total account for 30 to 90 wt.% of the total amount of surfactant in the liquid composition and the surfactant classes 5, 6, 8, 9, 10, 11, 12 and 13 in total account for 10 to 70 wt.% of the total amount of surfactant in the liquid composition; and
80 wt.% to 100 wt.% of the total amount of surfactant in the liquid composition is selected from the surfactant classes 1, 2, 3, 4, 5, 6, 8, 9, 10, 11, 12 and 13.

13. The herbicidal composition according to any one of claims 1 to 11, wherein:
the sulfonylurea herbicide that is present in an amount of 10 wt.% or less is thifensulfuron-methyl;
at least one of the surfactant classes 1-4 accounts for 10 wt.% or more of the total amount of surfactant in the liquid composition and at least one of the surfactant classes 5 to 14 accounts for 10 wt.% or more of the total amount of surfactant in the liquid composition;
the surfactant classes 1-4 in total account for 30 to 90 wt.% of the total amount of surfactant in the liquid composition and the surfactant classes 5 to 14 in total account for 10 to 70 wt.% of the total amount of surfactant in the liquid composition; and
80 wt.% to 100 wt.% of the total amount of surfactant in the liquid composition is selected from the surfactant classes 1 to 14.

14. The herbicidal composition according to any one of claims 1 to 11, wherein:
the sulfonylurea herbicide that is present in an amount of 10 wt.% or less is chlorimuron-ethyl;
at least one of the surfactant classes 1-4 accounts for 10 wt.% or more of the total amount of surfactant in the liquid composition and at least one of the surfactant classes 5, 7, 8, 9, 10, 11, 12, 13, and 14 accounts for 10 wt.% or more of the total amount of surfactant in the liquid composition;
the surfactant classes 1-4 in total account for 30 to 90 wt.% of the total amount of surfactant in the liquid composition and the surfactant classes 5, 7, 8, 9, 10, 11, 12, 13, and 14 in total account for 10 to 70 wt.% of the total amount of surfactant in the liquid composition; and
80 wt.% to 100 wt.% of the total amount of surfactant in the liquid composition is selected from the surfactant classes 1, 2, 3, 4, 5, 7, 8, 9, 10, 11, 12, 13, and 14.

15. The herbicidal composition according to any one of claims 1 to 11, wherein:
the sulfonylurea herbicide that is present in an amount of 10 wt.% or less is bensulfuron;
at least one of the surfactant classes 2 and 4 accounts for 10 wt.% or more of the total amount of surfactant in the liquid composition and at least one of the surfactant classes 5, 7, 10, 11, 13, and 14 accounts for 10 wt.% or more of the total amount of surfactant in the liquid composition;
the surfactant classes 2 and 4 in total account for 30 to 90 wt.% of the total amount of surfactant in the liquid composition and the surfactant classes 5, 7, 10, 11, 13, and 14, in total account for 10 to 70 wt.% of the total amount of surfactant in the liquid composition; and
80 wt.% to 100 wt.% of the total amount of surfactant in the liquid composition is selected from the surfactant classes 2, 4, 5, 7, 10, 11, 13, and 14.

16. The herbicidal composition according to any one of claims 1 to 11, wherein:
the sulfonylurea herbicide that is present in an amount of 10 wt.% or less is sulfosulfuron;
at least one of the surfactant classes 2 and 4 accounts for 10 wt.% or more of the total amount of surfactant in the liquid composition and at least one of the surfactant classes 5, 7, 10, 11, 13, and 14 accounts for 10 wt.% or more of the total amount of surfactant in the liquid composition;
the surfactant classes 2 and 4 in total account for 30 to 90 wt.% of the total amount of surfactant in the liquid composition and the surfactant classes 5, 7, 10, 11, 13, and 14, in total account for 10 to 70 wt.% of the total amount of surfactant in the liquid composition; and
80 wt.% to 100 wt.% of the total amount of surfactant in the liquid composition is selected from the surfactant classes 2, 4, 5, 7, 10, 11, 13, and 14.

17. The herbicidal composition according to any one of claims 1 to 11, wherein:
the sulfonylurea herbicide that is present in an amount of 10 wt.% or less is rimsulfuron;
at least one of the surfactant classes 2 and 4 accounts for 10 wt.% or more of the total amount of surfactant in the liquid composition and at least one of the surfactant classes 5, 7, 8, 10, 11, 13 and 14 accounts for 10 wt.% or more of the total amount of surfactant in the liquid composition;
the surfactant classes 2 and 4 in total account for 30 to 90 wt.% of the total amount of surfactant in the liquid composition and the surfactant classes5, 7, 8, 10, 11, 13 and 14, in total account for 10 to 70 wt.% of the total amount of surfactant in the liquid composition; and
80 wt.% to 100 wt.% of the total amount of surfactant in the liquid composition is selected from the surfactant classes 2, 4,5, 7, 8, 10, 11, 13 and 14.

18. The herbicidal composition according to any one of claims 1 to 11, wherein;
the sulfonylurea herbicide that is present in an amount of 10 wt.% or less is amidosulfuron;
at least one of the surfactant classes 2 and 4 accounts for 10 wt.% or more of the total amount of surfactant in the liquid composition and at least one of the surfactant classes 5, 7 and 11 accounts for 10 wt.% or more of the total amount of surfactant in the liquid composition;
the surfactant classes 2 and 4 in total account for 30 to 90 wt.% of the total amount of surfactant in the liquid composition and the surfactant classes 5, 7 and 11 in total account for 10 to 70 wt.% of the total amount of surfactant in the liquid composition; and
80 wt.% to 100 wt.% of the total amount of surfactant in the liquid composition is selected from the surfactant classes 2, 4, and5, 7 and 11.

19. The herbicidal composition according to any one of claims 1 to 11, wherein:
the sulfonylurea herbicide that is present in an amount of 10 wt.% or less is pyrazosulfuron;
at least one of the surfactant classes 1, 2 and 4 accounts for 10 wt.% or more of the total amount of surfactant in the liquid composition and at least one of the surfactant classes 5, 7, 8, 10, 11, 13 and 14 accounts for 10 wt.% or more of the total amount of surfactant in the liquid composition,
the surfactant classes 1, 2 and 4 in total account for 30 to 90 wt.% of the total amount of surfactant in the liquid composition and the surfactant class 5, 7, 8, 10, 11, 13 and 14 accounts for 10 to 70 wt.% of the total amount of surfactant in the liquid composition; and
80 wt.% to 100 wt.% of the total amount of surfactant in the liquid composition is selected from the surfactant classes 1, 2, 4,5, 7, 8, 10, 11, 13 and 14.

20. The herbicidal composition according to any one of claims 1 to 11, wherein:
the sulfonylurea herbicide that is present in an amount of 10 wt.% or less is triflusulfuron;
at least one of the surfactant classes 2 and 4 accounts for 10 wt.% or more of the total amount of surfactant in the liquid composition and at least one of the surfactant classes 5 and 11 accounts for 10 wt.% or more of the total amount of surfactant in the liquid composition;
the surfactant classes 2 and 4 in total account for 30 to 90 wt.% of the total amount of surfactant in the liquid composition and the surfactant classes 5 and 11 in total account for 10 to 70 wt.% of the total amount of surfactant in the liquid composition; and
80 wt.% to 100 wt.% of the total amount of surfactant in the liquid composition is selected from the surfactant classes 2, 4, 5 and 11.
